# EUROPÄISCHE PATENTSCHRIFT

(11) **EP 3 964 437 B1**
(45) Veröffentlichungstag und Bekanntmachung des Hinweises auf die Patenterteilung: **18.12.2024**
(21) Anmeldenummer: 21020415.2
(22) Anmeldetag: 16.08.2021
(51) Int. Cl.: B62M 9/122, B62M 9/125, B62M 9/126

(54) **ELEKTROMECHANISCHES SCHALTWERK ZUR KOAXIALEN MONTAGE MIT BLOCKIERVORRICHTUNG**
ELECTROMECHANICAL REAR DERAILLEUR FOR COAXIAL ASSEMBLY WITH BLOCKING DEVICE
DÉRAILLEUR ARRIÈRE ÉLECTROMÉCANIQUE POUR MONTAGE COAXIAL POURVU DE DISPOSITIF DE BLOCAGE

(30) Priorität: 03.09.2020 DE 102020005402; 21.07.2021 DE 102021003745
(43) Veröffentlichungstag der Anmeldung: 09.03.2022
(73) Patentinhaber: SRAM Deutschland GmbH, 97424 Schweinfurt (DE)
(72) Erfinder: Braedt, Henrik, 97456 Dittelbrunn/OT Hambach (DE); Redecker, Heiko, 97456 Dittelbrunn (DE)

(56) Entgegenhaltungen:
- EP-A1- 2 891 601
- CN-U- 203 727 600
- US-A1- 2013 303 317
- US-A1- 2020 062 344

## Beschreibung

Die Erfindung betrifft ein hinteres Schaltwerk, insbesondere ein elektromechanisches Schaltwerk zur koaxialen Montage an einer Hinterradachse.

Üblicherweise werden hintere Schaltwerke am rechten Ausfallende des Rahmens mit Hilfe eines Schaltauges befestigt. Das Schaltauge wird dazu an einem Ende koaxial mit der Hinterradachse am Rahmen festgelegt und an einem anderen Ende koaxial mit der B-Achse des Basiselements (B-Knuckle) des Schaltwerks verbunden. Der Abstand zwischen der geometrischen Achse A der Hinterradachse und der B-Achse des Basiselements wird vom Schaltauge überbrückt. Das Basiselement ist in am Rahmen montierten Zustand relativ zum Schaltauge um die B-Achse drehbar. Die Verdrehung des Schaltwerks wird nach vorne - gegen den Uhrzeigersinn (UZS) - mittels der B-Schrauben begrenzt. Der Verdrehung des Schaltwerks nach hinten (im UZS) wirkt die Kettenspannung entgegen.

Mechanische Schaltwerke zur koaxialen Montage an der Hinterradachse sind aus der EP 0 875 444 A1, der EP 1 342 658 A1 und der EP 1 764 297 A1 bekannt. Das separate Schaltauge entfällt, die B-Achse des Basiselements verläuft entlang der Hinterradachse A, also koaxial. Ein weiteres Beispiel wird in US 2013/303317 A1 bekannt, wobei die Merkmale der Präambel des Anspruchs 1 offenbar werden.

Ritzelpakete verfügen über eine Gangspreizung von 500 Prozent oder mehr. Solche Gangspreizungen können mit einem kleinsten Ritzel mit 9, 10 oder 11 Zähnen und einem größten Ritzel mit 50, 51, 52 Zähnen oder mehr erreicht werden.

Um die erhöhte Anzahl von Ritzeln mit dem Schaltwerk bedienen zu können, wird die Schaltwerksdimension vergrößert.

Schräggestellte Schwenkmechanismen (Schrägparallelogramm) können zu Schlägen in vertikaler Richtung, wie sie beim Fahren im Gelände auftreten, zu einer Bewegung des Schwenkmechanismus und damit zu ungewollten Schaltvorgängen (ghost shifting) führen. Um die stark unterschiedlich großen Ritzel anfahren zu können, müsste das Schrägparallelogramm noch schräger gestellt werden und/oder die Schaltwerksdimensionen weiter vergrößert werden. Beides würde die Anfälligkeit für ungewollte Schaltvorgänge weiter erhöhen.

Eine Aufgabe der Erfindung ist es, ein Schaltwerk zur Verfügung zu stellen, welches leicht montiert und eingestellt werden kann.

Der Abstand zwischen der oberen Kettenrolle eines Schaltwerks und dem Ritzel, unter dem die Kettenrolle positioniert ist, wird als B-Gap oder chain gap bezeichnet. Bei der Entwicklung einer Kettenschaltung wird im Allgemeinen ein möglichst konstanter B-Gap Verlauf angestrebt. Diese Verlaufskurve ergibt sich aus dem Zusammenwirken verschiedener geometrischer Parameter wie z. B. Parallelogramm Geometrie (Schwenkmechanismus), Abstand des Parallelogramms zur Hinterradachse A, Winkel des Parallelogramms zur Verbindungsebene Achse-Tretlagerachse (B-Angle), Abstand der P-Knuckle Achse (P-Achse) zum Parallelogramm, Käfiggeometrie, Größe der Kettenrollen, Übersetzungsspektrum der Ritzelkassette etc.

Es hat sich gezeigt, dass eine präzise Initialeinstellung des B-Gap einen besonders starken Einfluss auf die Robustheit und Schaltperformance hat. Mit gängiger Methode der B-Gap Einstellung lassen sich in der Praxis nur sehr ungenaue Ergebnisse erzielen. Problematisch ist hier vor allem die fehlende Referenz und der für weniger versierte Anwender zu komplexe Einstellprozess. Die Anwendung von B-Gap Schablonen ist hier hilfreich, führt aber aufgrund von Anwendungsfehlern oft nicht zu optimalen Ergebnissen.

Eine koaxiale Schaltwerksanbindung mit einem einstellbaren Anschlagselement erlaubt eine definierte Arretierung zwischen Kettenführungsanordnung (Käfig) und beweglichem Element (P-Knuckle) und ermöglicht eine einfache, schnelle und sehr genaue Einstellung des B-Gaps.

In der Praxis hat sich jedoch eine weitere Problemstellung herauskristallisiert. Bei Rahmen mit Hinterradfederung verändert sich beim Einfedern die Hinterbaugeometrie mit entsprechenden Auswirkungen auf den B-Gap, unter anderem aufgrund von Längenänderung der Kettenstreben und Änderung des B-Angles. Aus diesem Grund muss der B-Gap bisher in der sag-Position eingestellt werden. In der sag-Position ist der Hinterbau komplett eingefedert. Dafür muss der Hinterbau entsprechend belastet werden, so dass zwei Personen oder andere Mittel für die Einstellung nötig sind, z. B. Dämpferluft ablassen, Dämpfer ausbauen, komprimieren durch Hilfsmittel wie z. B. Spanngurt.

Aus der DE 10 2018 208 053 A1 ist ein hinteres Schaltwerk mit einer integrierten Anzeige bzw. Markierung an der Kettenführung bekannt. Die Markierung am Schaltwerk hat die gleiche Funktion wie eine B-Gap Schablone mit dem Vorteil, dass keine weiteren Teile benötigt werden. Die Markierung zeigt den korrekten Abstand der oberen Kettenrolle relativ zum Außenumfang des größten Ritzels einer Mehrfach-Ritzelanordnung (B-Gap) an. Nachteilig bei dieser Ausführung ist es jedoch, dass die Markierung nur eine einzig Einstellposition des Schaltwerks relativ zur Mehrfach-Ritzelanordnung angibt. Das heißt, unabhängig von der Fahrradkategorie (Fully oder Hardtail), wird das Schaltwerk immer in der gleichen Einstellposition eingestellt. Die Möglichkeit, die Einstellposition je nach Fahrradkategorie zu variieren, ist nicht gegeben. Entsprechend können vollgefederte Fahrräder bisher nur in der sag-Position - also komplett eingefedert - eingestellt werden.

Das erfindungsgemäße Schaltwerk mit der Blockiervorrichtung löst das Problem dadurch, dass es mindestens eine zweite Arretierungsmöglichkeit zwischen Käfig und P-Knuckle gibt, die der sag-Kompensation dient.

Um die verschiedenen Fahrradkategorien (z. B. Fully, Hardtail) abzudecken, muss die Blockiervorrichtung in verschiedene Positionen bringbar sein. Die Blockiervorrichtung kann entweder als Flip Chip (um 180 Grad drehbar) ausgebildet sein oder mit mehreren Arretieröffnungen im Käfig zusammenwirken. Insbesondere zwei oder drei Einstellpositionen haben sich als vorteilhaft erwiesen.

Die verschiedenen Ausführungsformen der Erfindung ergeben sich aus den Ansprüchen und der Figurenbeschreibung.

Eine weitere Ausführungsform der Erfindung hat nur eine Arretierungsmöglichkeit. Die Arretierungsposition wird so gewählt, dass eine definierte Ritzelposition zur Einstellung bei ungefederten Fahrrädern verwendet wird. Eine weitere (benachbarte) Ritzelposition wird für die Einstellung mit sag-Kompensation verwendet.

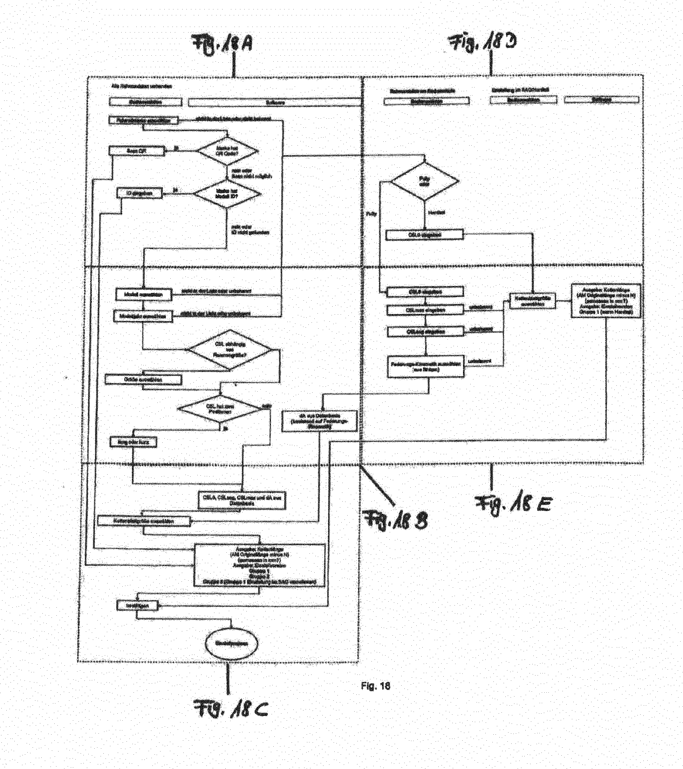

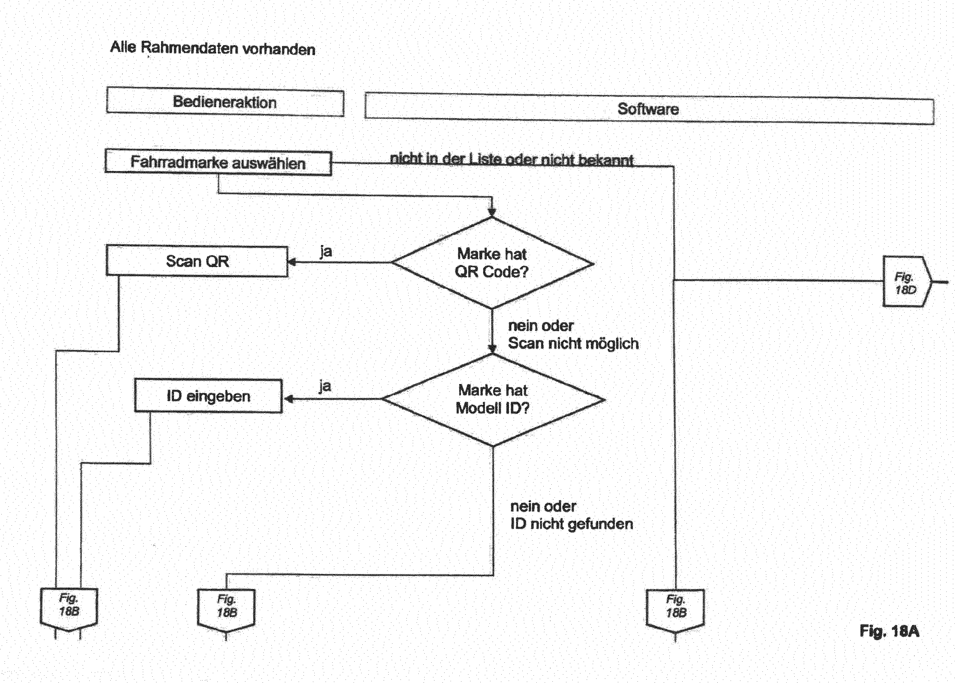

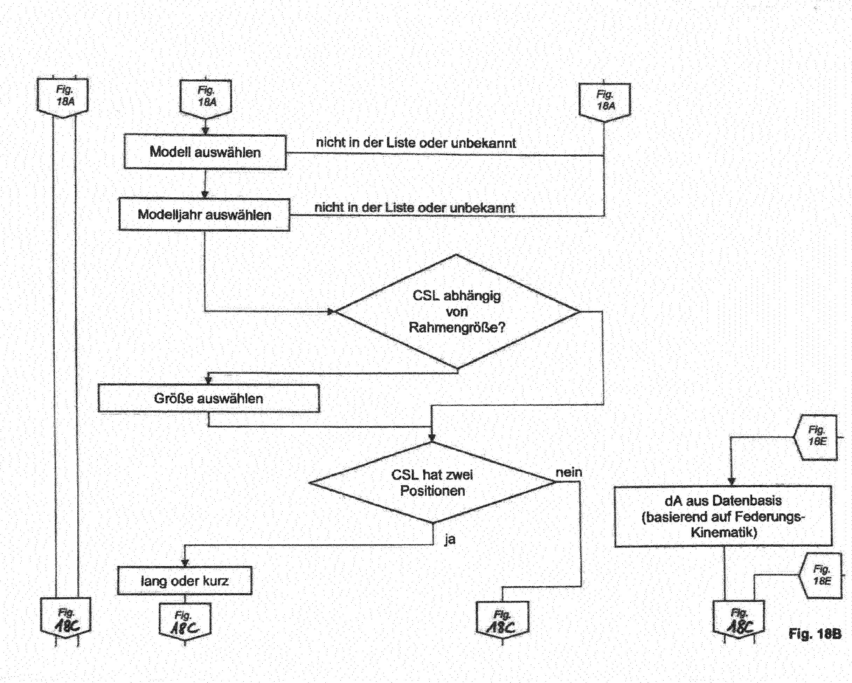

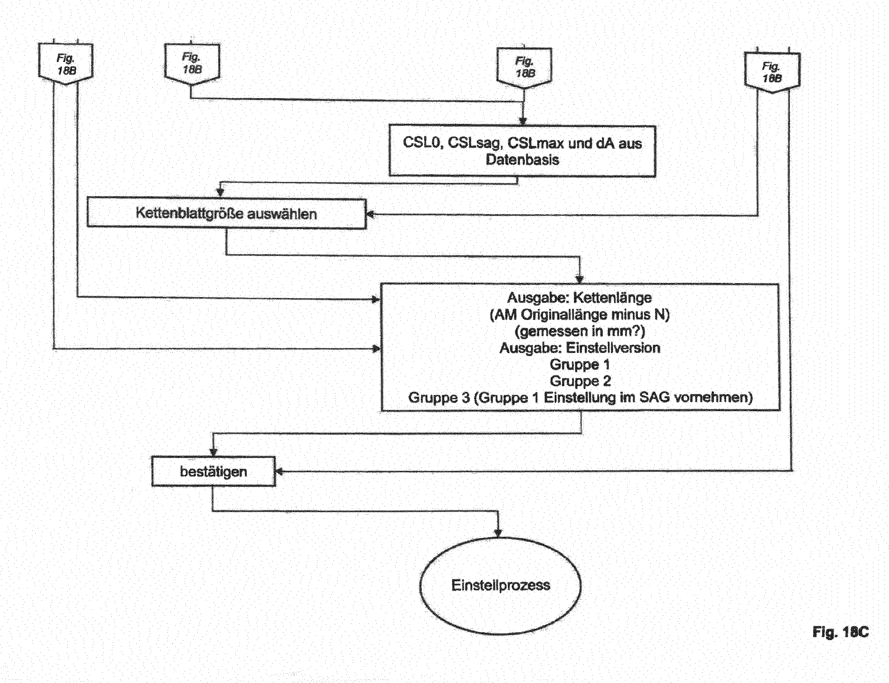

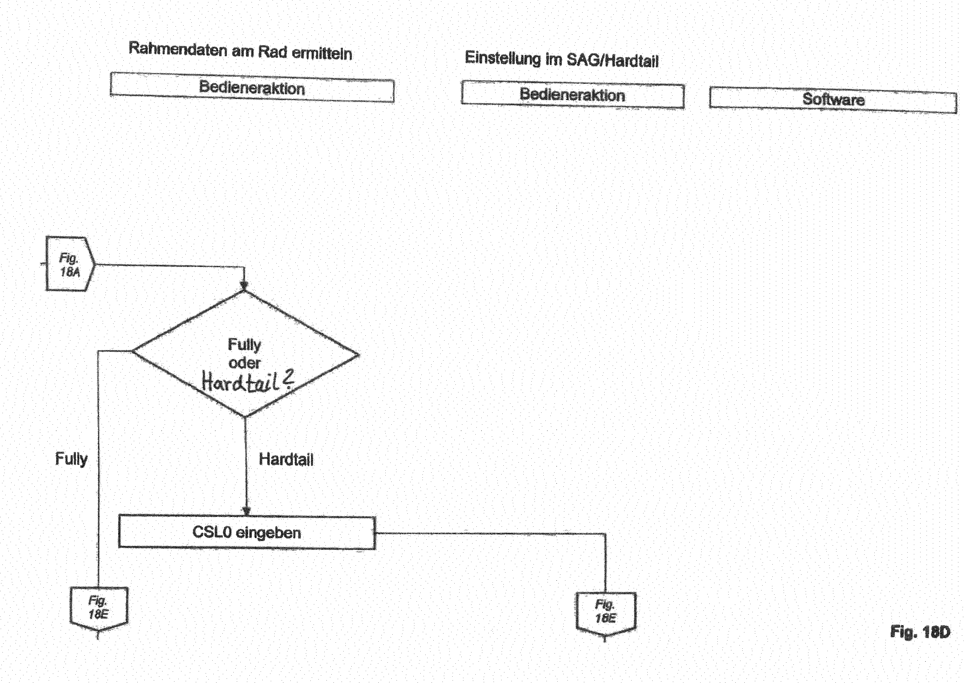

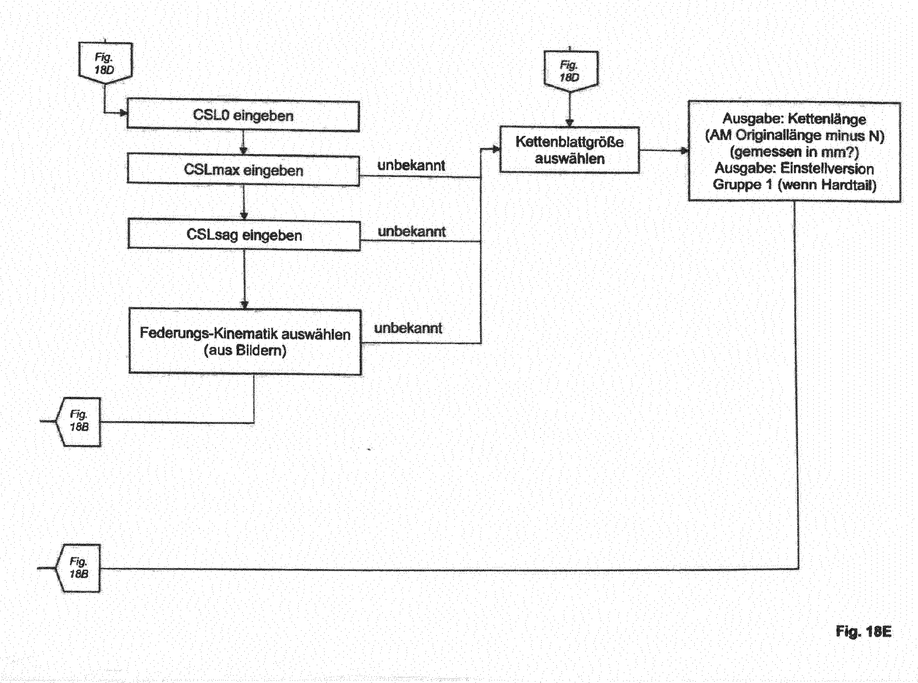

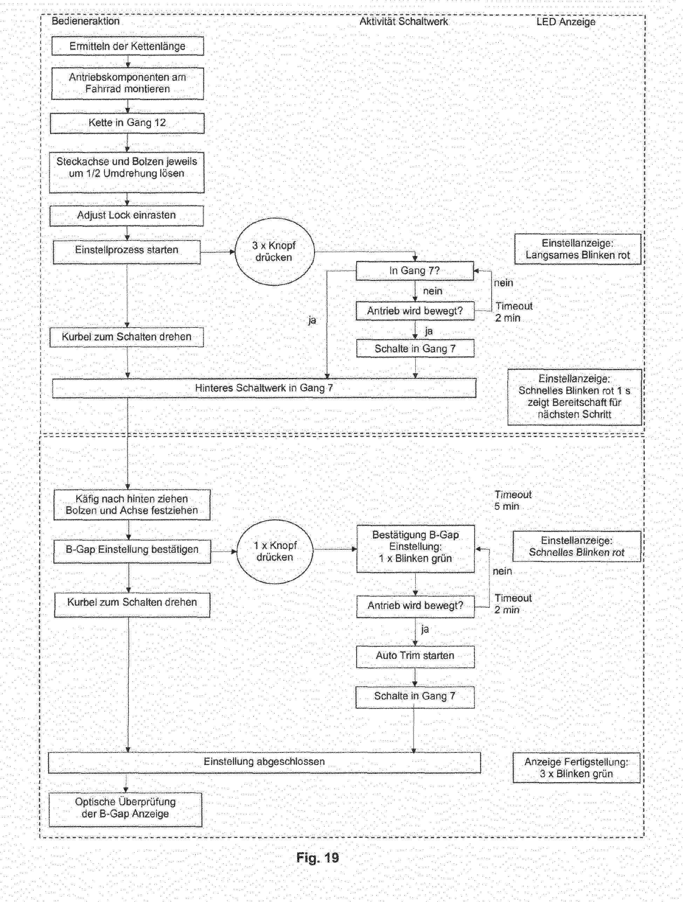

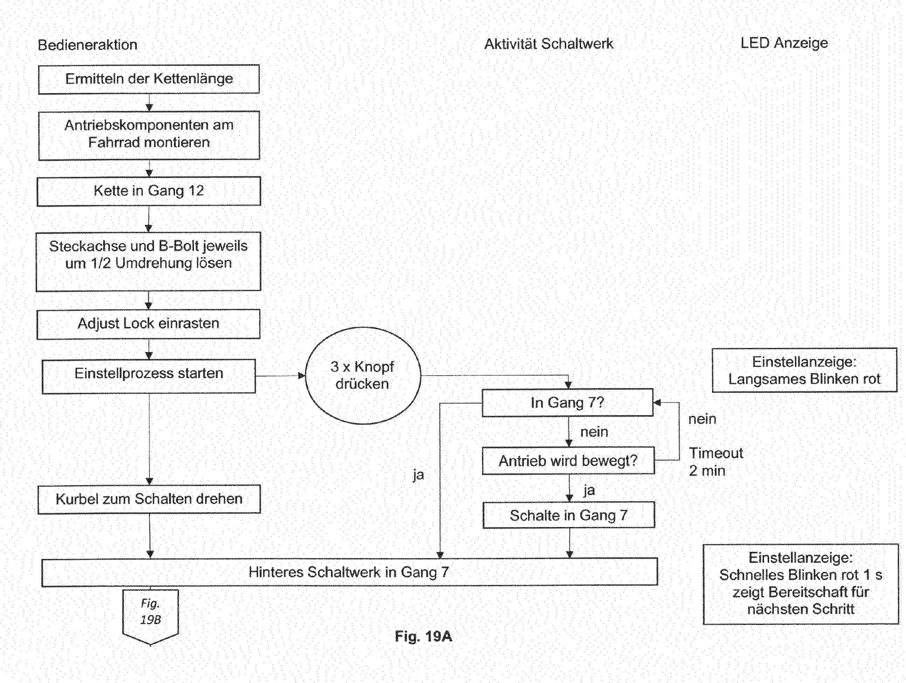

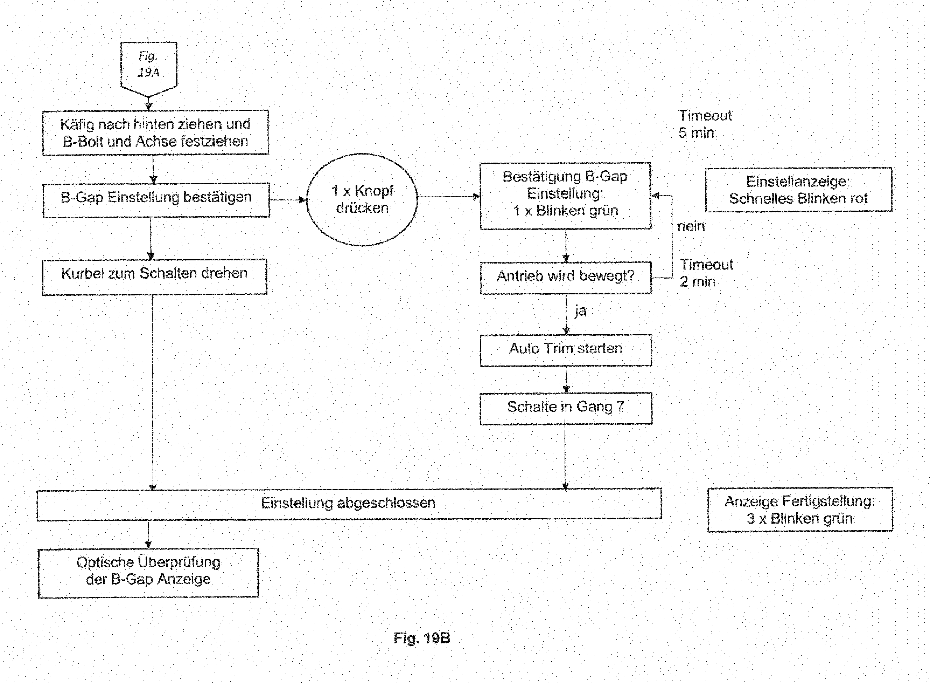

Ein weiterer Aspekt der Erfindung betrifft ein Verfahren zum Montieren und Einstellen des Schaltwerks. Die Verfahren sind in Zusammenhang mit den Figuren 18 und 19 beschrieben. Diese Verfahren bzw. einzelne Schritte könnten auch mit der Unterstützung einer Anwendungssoftware (kurz App) durchgeführt werden.

Dafür wird zunächst die Fahrradkategorie bestimmt. Je nach Kategorie des Fahrrads muss z. B. eine bestimmte Kettenlänge gewählt werden und die Blockiervorrichtung in der ersten oder zweiten Position eingesetzt werden.

### Kurzbeschreibung der Zeichnungen:

- Fig. 1: Schematische Teildarstellung einer Hinterradanordnung mit einem elektromechanischen Schaltwerk an einem Fahrradrahmen montiert
- Fig. 2: Außenansicht des Schaltwerks
- Fig. 3: Innenansicht des Schaltwerks in der ersten Blockierstellung und ersten Position
- Fig. 4: Innenansicht des Schaltwerks in der zweiten Blockierstellung und ersten Position
- Fig. 5: Innenansicht des Schaltwerks in der zweiten Blockierstellung und zweiten Position
- Fig. 6: Perspektivische Ansicht des beweglichen Elements mit Blockiervorrichtung
- Fig. 7: Schnittansicht des beweglichen Elements mit der Blockiervorrichtung in der zweiten Position - blockiert (Aktivstellung)
- Fig. 8: Schnittansicht des beweglichen Elements mit der Blockiervorrichtung in der zweiten Position - nicht blockiert (Passivstellung)
- Fig. 9: Schnittansicht der Blockiervorrichtung in der zweiten Position aus dem beweglichen Element entnommen
- Fig. 10: Schnittansicht des beweglichen Elements mit der Blockiervorrichtung in der ersten Position - blockiert (Aktivstellung)
- Fig. 11: Schnittansicht des beweglichen Elements mit der Blockiervorrichtung in der ersten Position - nicht blockiert (Passivstellung)
- Fig. 12: Schnittansicht der Blockiervorrichtung in der ersten Position aus dem beweglichen Element entnommen
- Fig. 13: Perspektivische Ansicht der Blockiervorrichtung - nicht blockiert (Passivstellung)
- Fig. 14: Innenansicht der erfindungsgemäßen Blockiervorrichtung
- Fig. 15: Außenansicht der erfindungsgemäßen Blockiervorrichtung
- Fig. 16: Perspektivischer Schnitt durch die Blockiervorrichtung - nicht blockiert (Passivstellung)
- Fig. 17: Schnittansicht durch die Blockiervorrichtung - nicht blockiert (Passivstellung)
- Fig. 18: Flussdiagramm Gesamtansicht - Auswahl der Fahrradkategorie
- Fig. 18A: Erster vergrößerter Abschnitt des Flussdiagramms aus Fig. 18 (oben links)
- Fig. 18B: Zweiter vergrößerter Abschnitt aus Fig. 18 (mitte links)
- Fig. 18C: Dritter vergrößerter Abschnitt aus Fig. 18 (unten links)
- Fig. 18D: Vierter vergrößerter Abschnitt aus Fig. 18 (oben rechts)
- Fig. 18E: Fünfter vergrößerter Abschnitt aus Fig. 18 (mitte rechts)
- Fig. 19: Flussdiagramm Gesamtansicht - Montage- und Einstellprozess des Schaltwerks
- Fig. 19A: Erster vergrößerter Abschnitt des Flussdiagramms aus Fig. 19 (oben)
- Fig. 19B: Zweiter vergrößerter Abschnitt des Flussdiagramms aus Fig. 19 (unten)
- Fig. 20A: Schaltwerk mit einer zweiten Ausführungsform der Blockiervorrichtung
- Fig. 20B: Teile des Schaltwerks aus Fig. 20A
- Fig. 21: Schaltwerk mit einer dritten Ausführungsform der Blockiervorrichtung
- Fig. 22: Schaltwerk mit einer vierten Ausführungsform der Blockiervorrichtung
- Fig. 23: Schaltwerk mit einer fünften Ausführungsform der Blockiervorrichtung
- Fig. 24: Schaltwerk mit einer sechsten Ausführungsform der Blockiervorrichtung
- Fig. 25A: Schaltwerk mit einer siebten Ausführungsform der Blockiervorrichtung - erste Einstellposition, Aktivstellung
- Fig. 25B: Schnittansicht des Schaltwerks aus Fig. 25A
- Fig. 26A: Schaltwerk mit einer siebten Ausführungsform der Blockiervorrichtung-Wechselstellung zwischen erster und zweiter Position
- Fig. 26B: Schnittansicht des Schaltwerks aus Fig. 26A
- Fig. 27A: Schaltwerk mit einer siebten Ausführungsform der Blockiervorrichtung - zweite Einstellposition, Aktivstellung
- Fig. 27B: Schnittansicht des Schaltwerks aus Fig. 27A
- Fig. 28: Schaltwerk mit einer achten Ausführungsform der Blockiervorrichtung
- Fig. 29A: Schaltwerk mit einer neunten Ausführungsform der Blockiervorrichtung
- Fig. 29B: Schnittansicht des Schaltwerks aus Fig. 29A
- Fig. 30: Schaltwerk mit einer zehnten Ausführungsform der Blockiervorrichtung
- Fig. 31: Diagramm zur Einstellung im ersten und im siebten Gang

### Detaillierte Beschreibung der bevorzugten Ausführungsformen

Die im Folgenden verwendeten Richtungsangaben "vorne/hinten", "außen/innen, "oben/unten" und "links/rechts" beziehen sich auf ein Fahrrad, das in Fahrtrichtung ausgerichtet und verwendet wird. Der Fahrradrahmen 1 hat ein linkes und ein rechtes hinteres Ausfallende 2, zwischen denen ein hier nicht gezeigtes Hinterrad montiert ist. Das Hinterrad dreht sich zusammen mit dem Ritzelpaket 4 um die Hinterradachse A. Das Ritzelpaket 4 ist schematisch dargestellt und dreht sich um die Hinterradachse A. Ein solches Ritzelpaket 4 kann beispielsweise 12 Ritzel umfassen, wobei das kleinste Ritzel zehn Zähne und das größte Ritzel 52 Zähne aufweist.

Das elektromechanische Schaltwerk 10 ist am rechten Ausfallende 2 montiert. Beim Schalten von einem größeren Ritzel auf ein kleineres Ritzel, bewegt das hintere Schaltwerk 10 die Kette 5 nach axial außen (outboard). Beim Schalten von einem kleineren Ritzel auf ein größeres Ritzel bewegt das hintere Schaltwerk 10 die Kette 5 nach axial innen (inboard). Axial bezieht sich auf die Hinterradachse A bzw. die Drehachse A der Mehrfach-Ritzelanordnung 4. Das größte Ritzel liegt axial weiter innen als die kleineren Ritzel. Die Zähne sind radial außen an den Ritzeln angeordnet. Die Kette 5 durchläuft die Kettenführungsanordnung s-förmig und steht mit den Zähnen des oberen und unteren Kettenführungsröllchen sowie den hier nicht gezeigten Zähnen des Ritzelpakets 4 in Eingriff.

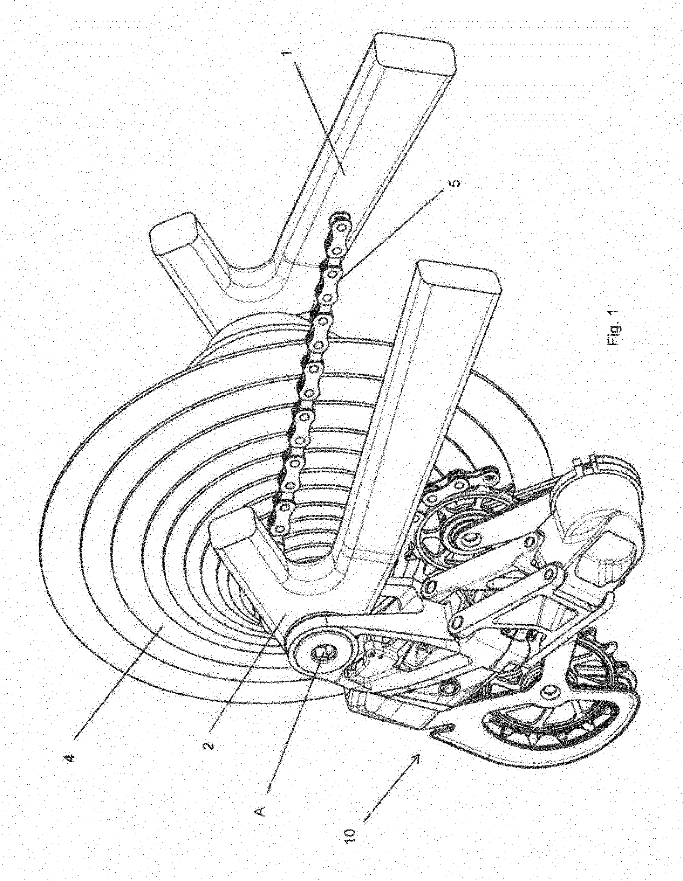

Der in Figur 1 gezeigte Fahrradantrieb umfasst ein hier nicht gezeigtes vorderes Einzelkettenrad, ein hinteres Ritzelpaket 4, eine Kette 5 und ein hinteres Schaltwerk 10. Von einem am Lenker montierten Schalter (hier nicht gezeigt) werden Schaltsignale an das elektromechanische Schaltwerk 10 gesendet. Die Übertragung der Schaltsignale vom Schalter zum Schaltwerk 10 erfolgt kabellos bzw. drahtlos. Eine Übertragung der Schaltsignale mittels Kabel wäre ebenfalls denkbar. Die erfindungsgemäße Blockiervorrichtung ist gleichermaßen mit einem mechanischen, als auch einem elektromechanischen Schaltwerk anwendbar.

Figur 1 zeigt eine perspektivische Außenansicht einer Ausführungsform des hinteren Schaltwerks 10 am rechten Ausfallende 2 des Rahmens 1 montiert.

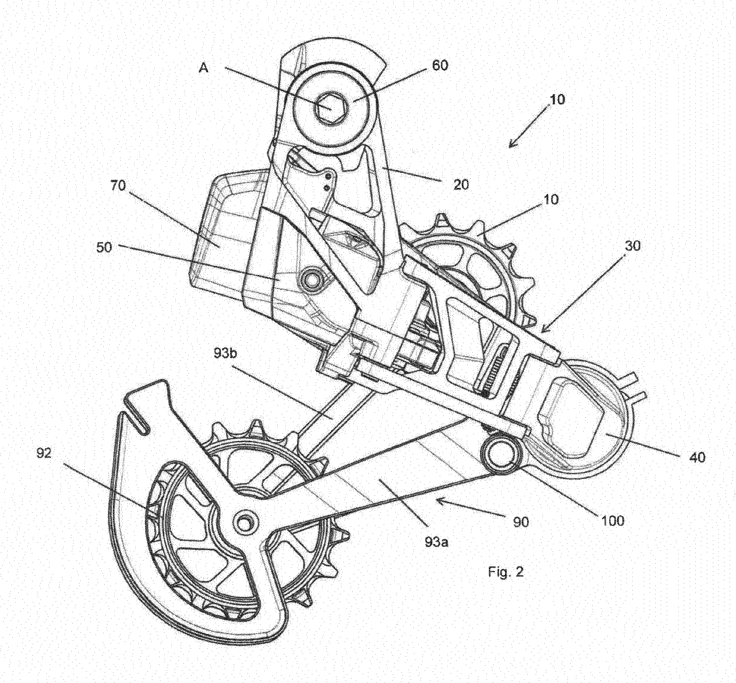

Figur 2 zeigt nur das Schaltwerk 10 in der Außenansicht. Die koaxiale Montage des Schaltwerks 10 mittels Bolzen 60 entlang der Hinterradachse A bzw. der B-Achse des Basiselements 20 spart den Einsatz eines Schaltauges.

Die Kettenführungsanordnung 90 ist um die Schwenkachse 41 (P-Achse) drehbar mit dem beweglichen Element 40 verbunden und im UZS (nach hinten) vorgespannt, so dass die Kette gespannt wird. Die Kettenführungsanordnung 90 umfasst ein oberes und ein unteres Kettenführungsröllchen 91, 92, die jeweils zwischen zwei Käfigblechen 93a, 93b drehbar gelagert sind. Das obere Kettenführungsröllchen 91 ist in einem oberen Abstand von der Achse 41 drehbar angeordnet. Das untere Kettenführungsröllchen 92 ist in einem unteren Abstand von der P-Achse 41 drehbar angeordnet, wobei das obere Kettenführungsröllchen 91 in einem kleineren Abstand von der P-Achse 41 als das untere Kettenführungsröllchen 92 angeordnet ist. Das bewegliche Element 40 umfasst eine Blockiervorrichtung 100 (Flip-Chip), die es erlaubt, die vorgespannte Kettenführungsanordnung 90 gegenüber dem beweglichen Element 40 festzulegen. So kann das Schaltwerk 10 montiert und eingestellt werden, ohne dass die Kettenführungsanordnung 90 aufgrund der Vorspannung nach hinten schnappt.

Das Schaltwerk 10 umfasst ein zweiteiliges Basiselement 20, ein bewegliches Element 40, eine Kettenführungsanordnung 90 und einen Schwenkmechanismus 30, der das Basiselement 20 mit dem beweglichen Element 40 verbindet. Der elektromechanische Antrieb zum Antreiben des Schwenkmechanismus 30 ist im Getriebegehäuse 50 aufgenommen und wird vom Basiselement 20 gehalten. Die Energiequelle 70 ist hinten am Basiselement 20 angebracht.

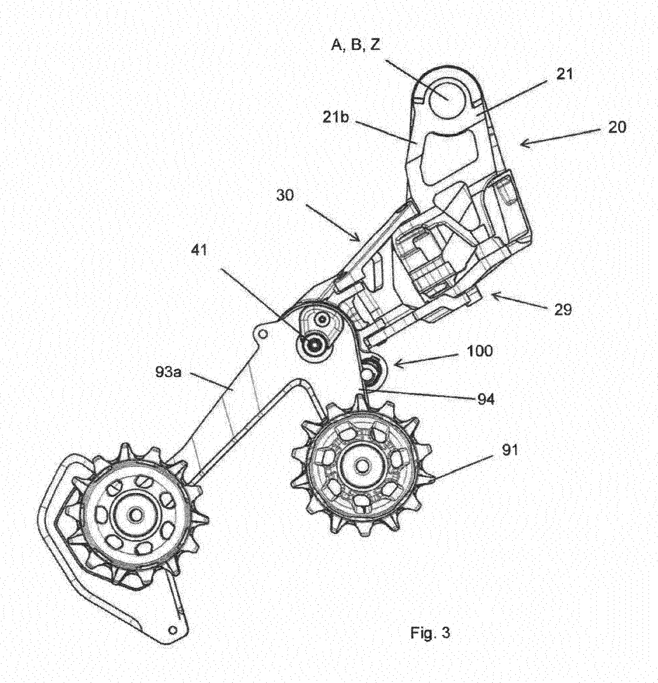

Figuren 3 bis 5 zeigen Innenansichten des elektromechanischen Schaltwerks 10 in verschiedenen Blockierstellungen. Zur besseren Sichtbarkeit ist unter anderem das innere Käfigblech 93b nicht dargestellt.

Das Basiselement 20 weist an seinem ersten Anschlussende 21 zwei Arme 22a, 22b auf, welche zur Montage an der Hinterradachse A von einem Bolzen entlang der B-Achse bzw. Z-Achse durchgriffen werden. In am Rahmen montierten Zustand verlaufen die B-Achse des Bolzens 60 und die Z-Achse der Zentrieröffnungen des Basiselements 20 koaxial zur Rahmenöffnung und damit zur Hinterradachse A. Das Zusammenfallen der drei Achsen A, B und Z in montiertem Zustand ergibt sich aus den Figuren 1 bis 3. Unter der koaxialen Montage des elektromechanischen Schaltwerks 10 an der Hinterradachse A ist das Zusammenfallen der B-Achse des Schaltwerks 10 und der Hinterradachse A zu verstehen. Bei nicht-koaxial montierten Schaltwerken ist die B-Achse des Schaltwerks von der Hinterradachse A beabstandet.

Das Basiselement 20 weist an seinem zweiten Anschlussende 29 zwei Achsaufnahmen für die Schwenkachsen zur drehbaren Lagerung der Schwenkarme des Schwenkmechanismus 30 auf. Die Längsachsen der Achsaufnahmen verlaufen im Wesentlichen parallel zu den Ritzelebenen bzw. schneiden die Hinterradachse A im rechten Winkel. Unabhängig davon, ob das Basiselement 20 ein- oder mehrteilig ausgebildet ist, ist die Position der Zentrieröffnungen in den Armen 22a, 22b am ersten Anschlussendes 21 und die Position der Achsaufnahmen am zweiten Anschlussende 29 relativ zueinander unveränderlich. Die Zentrieröffnungen des ersten Anschlussendes 21 sind koaxial mit der Hinterradachse A montierbar und das zweite Anschlussende 29 dient der Kopplung mit dem Schwenkmechanismus 30. Das heißt, die Z-Achse der Zentrieröffnung und die Längsachsen der Achsaufnahmen für die Schwenkachsen sind zueinander unveränderlich. In anderen Worten sind sie relativ zueinander starr ausgebildet. Anders als im Stand der Technik, gibt es keine Gelenkverbindung zwischen einem Schaltauge, welches zur Montage an der Hinterradachse A ausgebildet ist und dem Basiselement (B-Knuckle), welcher die Achsaufnahmen für den Schwenkmechanismus umfasst.

Figur 3 zeigt das Schaltwerk in der ersten Blockierstellung (Cage Lock), in welcher die Kettenführungsanordnung 90 relativ zum beweglichen Element 40 zum Ausbau des Hinterrads festgelegt wird. Dazu greift das Blockierelement 120 der Blockiervorrichtung 100 an einer Kante des oberen Käfigarms 94 des äußeren Käfigblechs 93a zwischen dem oberen Kettenführungsröllchen 91 und der Schwenkachse 41 an.

Je nachdem, welche Fahrradkategorie vorliegt, kann die Blockiervorrichtung 100 in der ersten Position oder in der um 180 Grad gedrehten zweiten Position in dem beweglichen Element 40 verrastet sein. Figur 3 zeigt die Blockiervorrichtung 100 in der ersten Position (entspricht Fahrradkategorie 1).

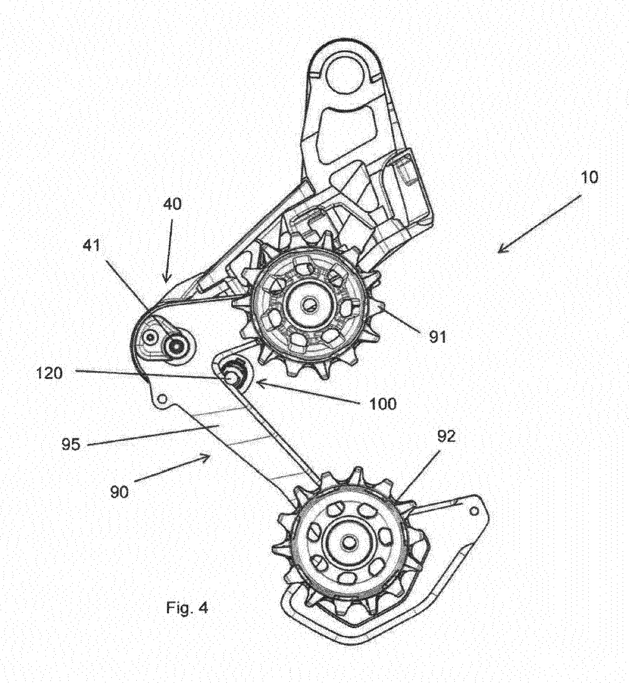

Figur 4 zeigt das Schaltwerk in der zweiten Blockierstellung (Chain Gap Adjust), in welcher die Kettenführungsanordnung 90 relativ zum beweglichen Element 40 zum Einstellen des hinteren Schaltwerks 10 relativ zur Mehrfach-Ritzelanordnung 4 festgelegt wird. Dazu greift das Blockierelement 120 der Blockiervorrichtung 100 an einer Kante des unteren Käfigarms 95 des äußeren Käfigblechs 93a zwischen dem unteren Kettenführungsröllchen 92 und der Schwenkachse 41 (P-Achse) an. Je nachdem, welche Fahrradkategorie vorliegt, kann die Blockiervorrichtung 100 in der ersten Position oder in der dazu um 180 Grad gedrehten zweiten Position in das bewegliche Element 40 eingesteckt sein. Figur 4 zeigt die Blockiervorrichtung 100 in der ersten Position (entspricht Fahrradkategorie 1).

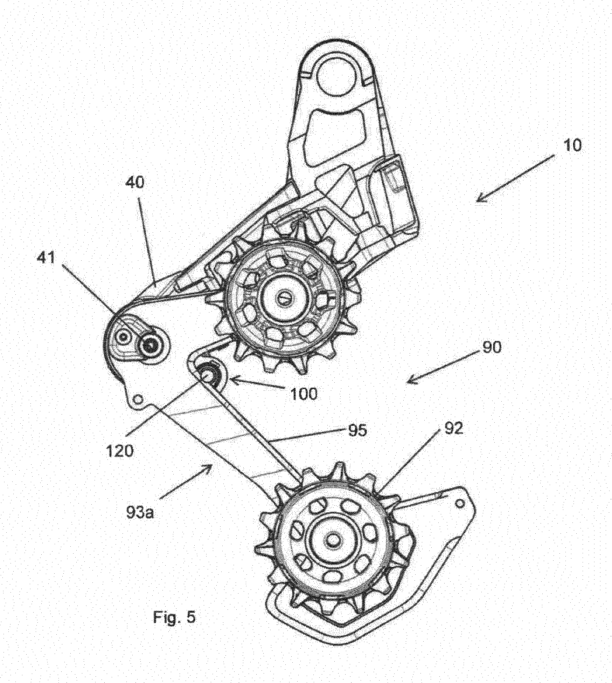

Figur 5 entspricht weitestgehend der Darstellung in Figur 4 und zeigt das Schaltwerk ebenfalls in der zweiten Blockierstellung. Jedoch ist die Blockiervorrichtung 100 in dieser Ausführungsform in der zweiten Position (entspricht Fahrradkategorie 2) in das bewegliche Element 40 eingesteckt. Das heißt, die Blockiervorrichtung 100 ist im Vergleich zu Figur 4 um 180 Grad gedreht angeordnet. Aufgrund des exzentrischen Aufbaus der Blockiervorrichtung 100 verlagert sich durch die 180 Grad Drehung die Kontaktfläche 126 des Blockierelements 120 zum Zusammenwirken mit dem unteren Käfigarm 95 des äußeren Käfigblechs 93a. Entsprechend später kommt der Käfig in Kontakt mit dem Blockierelement 120, so dass sich die Kettenführungsanordnung 90 aufgrund der Dämpfervorspannung weiter um die P-Achse 41 nach hinten dreht.

Die Kettenführungsanordnung 90 wird in der zweiten Position der Blockiervorrichtung 100 in einer anderen Winkelposition relativ zum beweglichen Element 40 blockiert als in der ersten Position der Blockiervorrichtung 100. Vergleicht man die Figuren 4 und 5 wird dies sichtbar.

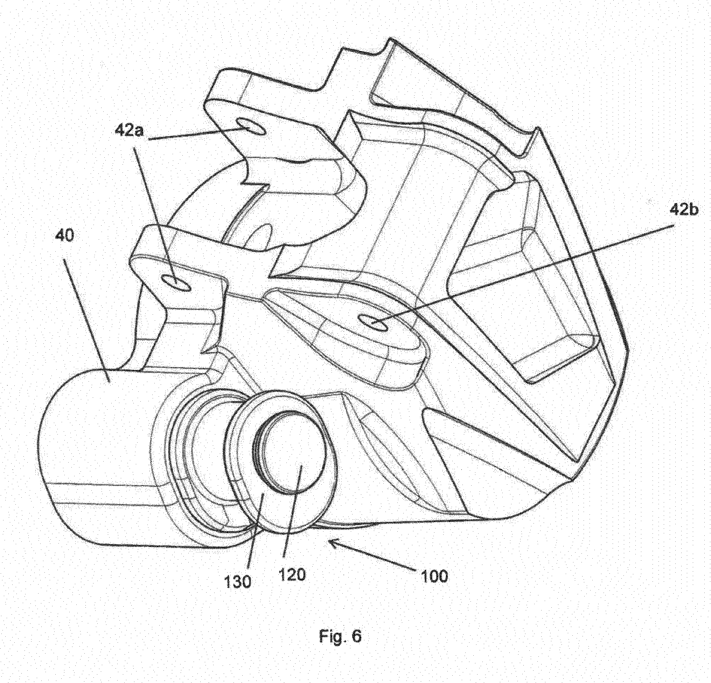

Figur 6 zeigt eine perspektivische Außenansicht des beweglichen Elements 40 mit der daran angebrachten Blockiervorrichtung 100. Das bewegliche Element 40 weist dafür eine Öffnung auf, in der die Blockiervorrichtung 100, bestehend aus Schubbolzen 120 und Bolzengehäuse 130, aufgenommen und festgelegt ist. Die Blockiervorrichtung 100 ist in einer Blockierstellung gezeigt, der Schubbolzen 120 ist auf Anschlag in das Bolzengehäuse 130 gedrückt. Das bewegliche Element 40 weist weiter zwei Achsaufnahmen 42a, 42b auf, in welche die Schwenkachsen des Schwenkmechanismus 30 (siehe eine der vorhergehenden Figuren) lagerbar sind.

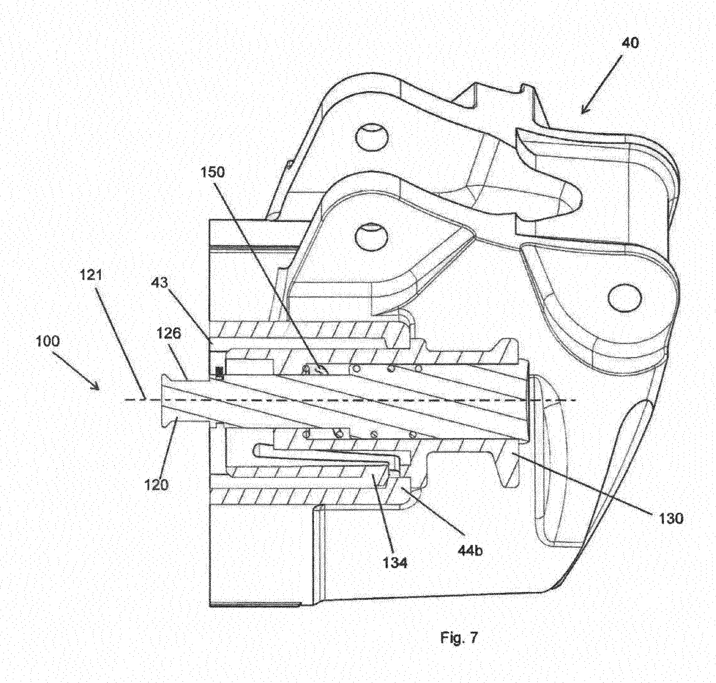

Figur 7 zeigt eine Schnittansicht durch das bewegliche Element 40, genauer gesagt durch die Aufnahme 43 und die darin angeordnete Blockiervorrichtung 100. Die Blockiervorrichtung 100 ist in der zweiten Position in der Aufnahme 43 verrastet. In der zweiten Position liegt die elastische Rastnase 134 des Bolzengehäuses 130 an dem zweiten Hinterschnitt 44b der Aufnahme 43 des beweglichen Elements 40 an. Die Blockiervorrichtung 100 befindet sich in einer Blockierstellung (Aktivstellung). Das heißt, der Schubbolzen 120 ist entlang der Längsachse 121 im Bolzengehäuse 130 verschoben. Dazu muss die Federkraft der Feder 150 z. B. durch händisches Drücken überwunden werden.

Die hier nicht dargestellte, vorgespannte Kettenführungsanordnung drückt gegen die Kontaktfläche 126 am Schubbolzen 120 und hält diesen so lange in der Aktivstellung, bis die Kettenführungsanordnung händisch entgegen der Dämpfervorspannung nach vorne gedreht wird. Dann wird der Schubbolzen 130 freigegeben und springt aufgrund der Federvorspannung 150 zurück in seine Ausgangsstellung bzw. Passivstellung.

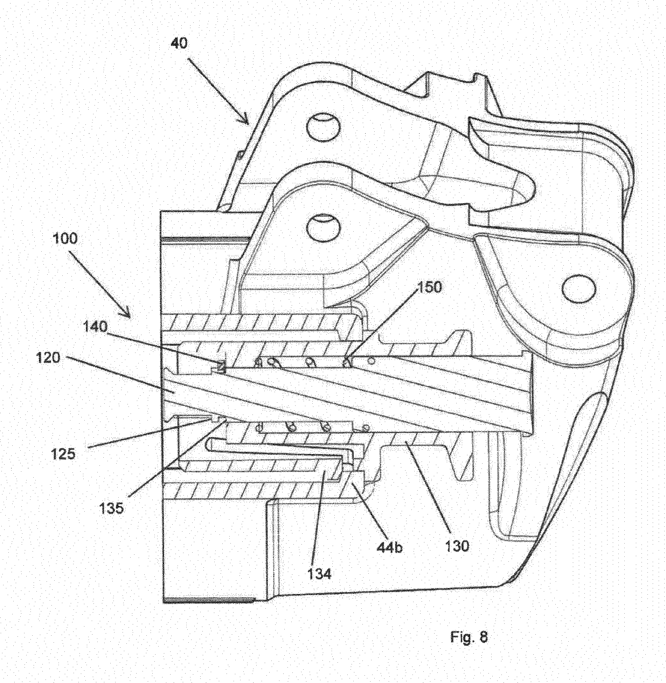

Figur 8 zeigt die Blockiervorrichtung 100 aus der Figur 7 wiederum in der zweiten Position, mit der Rastnase 134 in Eingriff mit dem zweiten Hinterschnitt 44b. Die Blockiervorrichtung 100 befindet sich in dieser Darstellung nicht in einer Blockierstellung, sondern in einer Passivstellung. Der Schubbolzen 120 ist aufgrund der Federkraft der Feder 150 in seiner Ausgangsstellung positioniert. In axialer Richtung ist die Bewegung des Schubbolzens 120 durch den Sicherungsring 140 begrenzt. Der Sicherungsring 140 wirkt einerseits mit dem Hinterschnitt 125 am Schubbolzen 120 und andererseits mit dem Anschlag 135 am Bolzengehäuse 130 zusammen. Der Sicherungsring verhindert, dass der Schubbolzen 130 nach axial außen aus dem Gehäuse 130 rutscht.

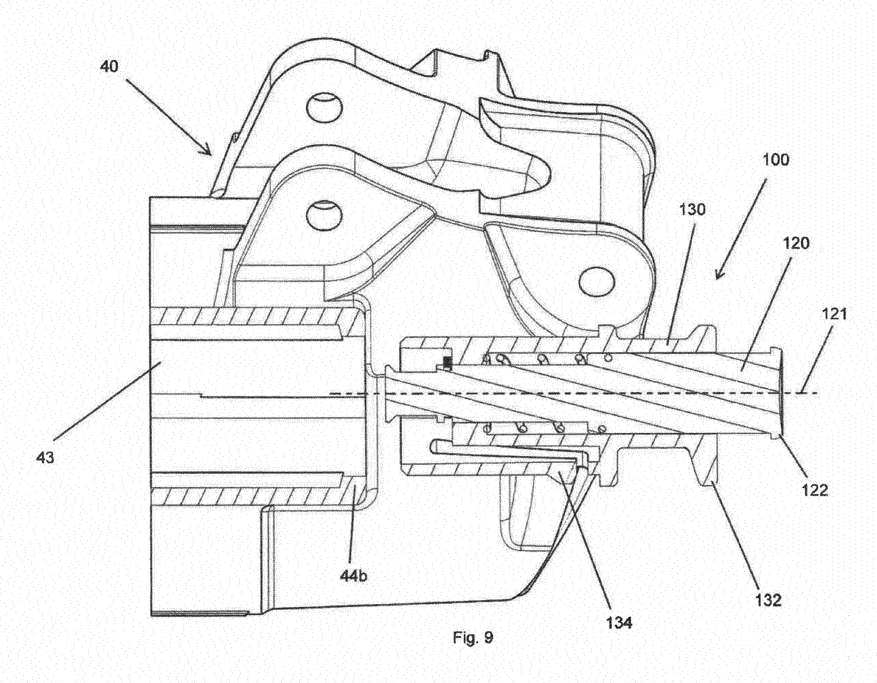

Figur 9 zeigt die Blockiervorrichtung 100 aus der Figur 7 und 8, wie sie in der zweiten Position aus dem beweglichen Element 40 entnommen wird. Dazu muss durch Zugkraft die elastische Verrastung zwischen der Rastnase 134 und dem zweiten Hinterschnitt 44b überwunden werden. Sowohl die Rastnase 134, als auch der Hinterschnitt 44b sind deshalb abgeschrägt ausgebildet. Die Blockiervorrichtung 100 kann am Vorsprung 132 des Bolzengehäuse 130 gegriffen werden und aus der Aufnahme 43 in Richtung der Längsachse 121 gezogen werden.

Der Vorsprung 132 dient gleichzeitig als äußerer axialer Anschlag für den Schubbolzen 130. Das durchmesservergrößerte Druckende 122 des Schubbolzens 120 schlägt in der Aktivstellung der Stirnseite des Vorsprungs 132 am Gehäuse 130 an.

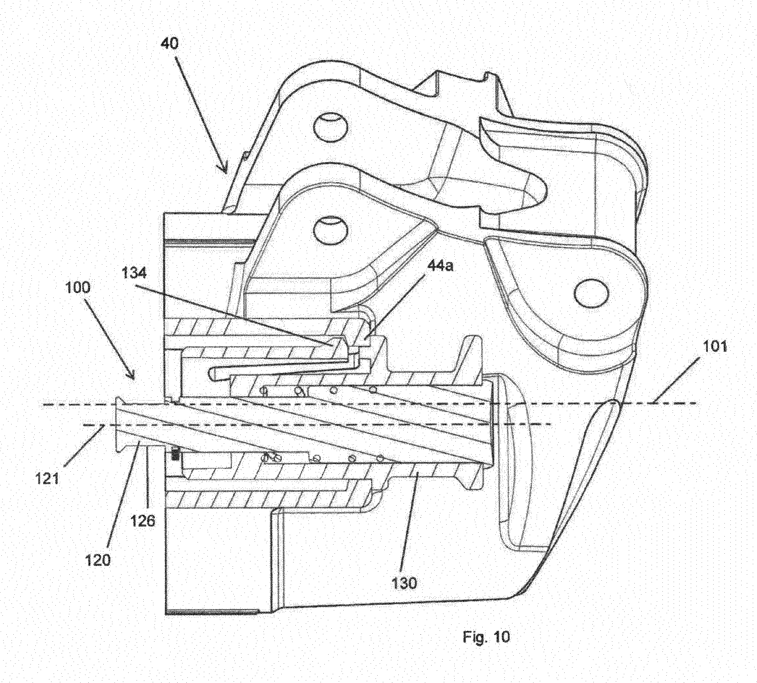

Figur 10 zeigt eine Schnittansicht durch das bewegliche Element 40, genauer gesagt durch die Aufnahme 43 und die darin angeordnete Blockiervorrichtung 100. Die Blockiervorrichtung 100 ist diesmal in der ersten Position in der Aufnahme 43 verrastet. In der ersten Position liegt die elastische Rastnase 134 des Bolzengehäuses 130 an dem zweiten Hinterschnitt 44a der Aufnahme 43 des beweglichen Elements 40 an. Somit ist die Blockiervorrichtung 100 in der ersten Position um 180 Grad gegenüber der in Figur 7 bis 9 dargestellten zweiten Position gedreht. Die 180 Drehung erfolgt um die Längsachse 101 der Blockiervorrichtung 100. Die Längsachse der Blockiervorrichtung 100 verläuft parallel aber versetzt zur Längsachse 121 des Schubbolzens 120. Der Schubbolzen 120 ist also exzentrisch im Gehäuse 130 angeordnet. Die Blockiervorrichtung 100 ist in einer Blockierstellung (Aktivstellung) dargestellt.

Vergleicht man die um 180 Grad gedrehte Blockiervorrichtung 100 in Figur 7 (zweite Position) und in Figur 10 (erste Position), so ist zu erkennen, dass die Längsachsen 121 in einem Abstand X voneinander zum Liegen kommen. Diese unterschiedliche Positionierung der Längsachse 121 des Schubbolzens 120 führt zu einer Verlagerung der Kontaktfläche 126. Entsprechend wird die Kettenführungsanordnung in einer anderen Winkelposition blockiert.

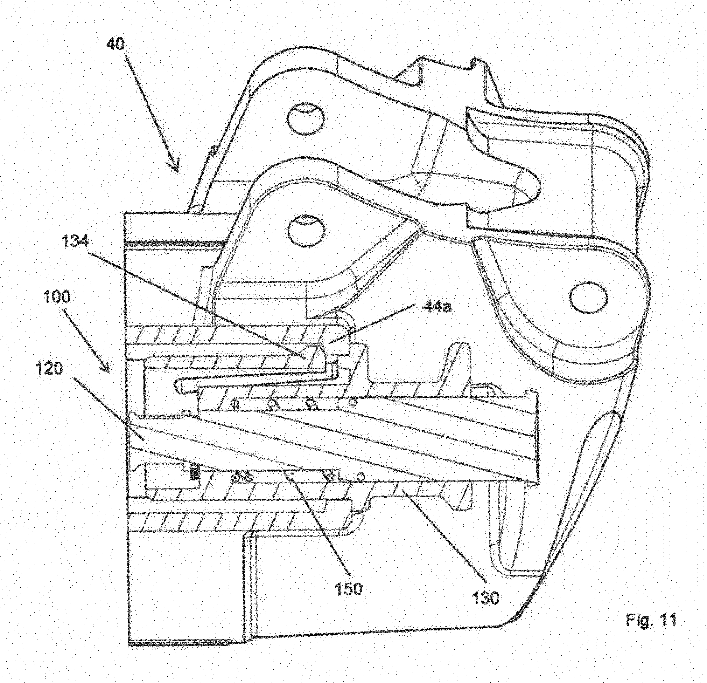

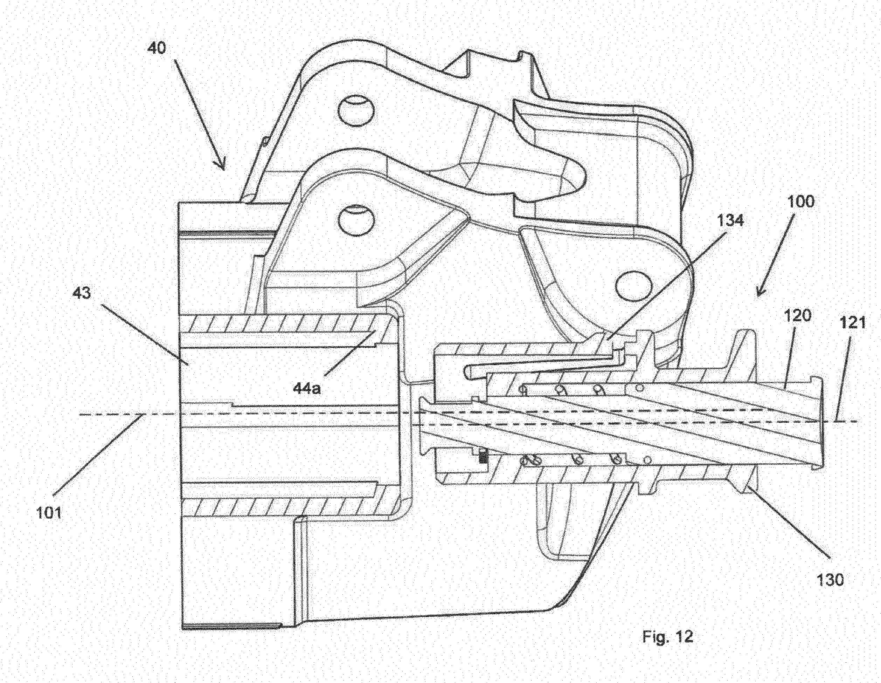

Figur 11 und 12 entsprechen weitestgehend den Darstellungen in Figur 8 und 9 mit dem Unterschied, dass die Blockiervorrichtung in der ersten Position, also um 180 Grad um die Längsachse der Blockiervorrichtung 100 gedreht in das bewegliche Element 40 eingesetzt ist. Entsprechend ist die Rastnase 134 mit dem ersten Hinterschnitt 44a in Eingriff gebracht.

Figur 11 zeigt die Blockiervorrichtung 100 in einer nicht blockierten Stellung (Passivstellung).

Figur 12 zeigt wiederum die aus der Aufnahme 43 entnommene Blockiervorrichtung 100. Die angeschrägte elastische Rastnase 134 hat zur Entnahme den angeschrägten ersten Hinterschnitt 44a überwunden und wird entlang der Längsachse 101 aus der Aufnahme 43 gezogen. Die Längsachse 101 der Blockiervorrichtung 100 entspricht auch der Längsachse der Aufnahme 43 im beweglichen Element 40. Die Längsachse 101 verläuft parallel versetzt zur Längsachse 121 des Schubbolzens 120.

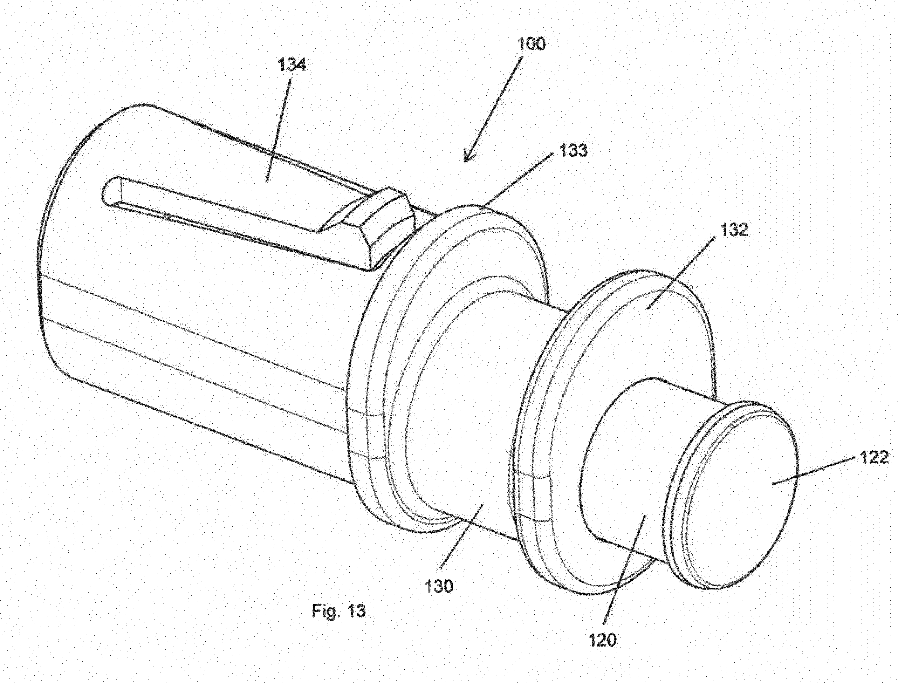

Figur 13 zeigt eine perspektivische Ansicht der Blockiervorrichtung 100 in der nicht blockierten Stellung (Passivstellung). Das Blockierelement 120 steht nach axial außen über das Bolzengehäuse 130 vor. Das Druckende 122 ist vom Anschlag 132 beabstandet. Das Bolzengehäuse 130 verfügt über verschieden große, elliptische Außendurchmesser. Die elastische Rastnase 134 ist einstückig mit dem Bolzengehäuse 130 geformt. Der vergrößerte Durchmesser 133 dient als Anschlag am beweglichen Element 40, insbesondere an der axialen äußeren Stirnseite der Aufnahme 43 (siehe Figur 11). Der vergrößerte Durchmesser 132 dient als Anschlag für das Druckende 122 und auch als Angriffsfläche um die Blockiervorrichtung 100 aus dem beweglichen Element zu ziehen und zu handhaben.

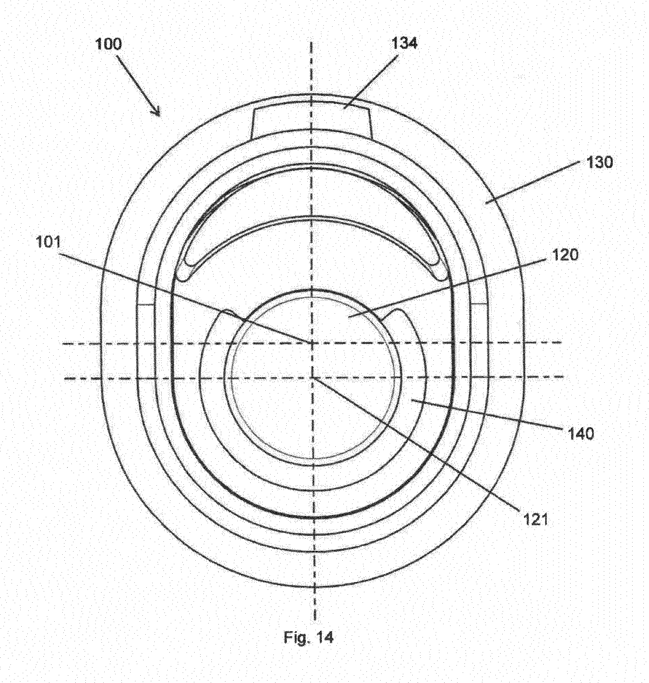

Figur 14 zeigt eine Innenansicht der Blockiervorrichtung 100. Hier wird die exzentrische Ausrichtung des Blockierelements 120 deutlich. Es sind beide Querachsen für das Blockierelement 120 und die Blockiervorrichtung 100 eingezeichnet. Die Querachsen schneiden sich jeweils im Zentrum bzw. entlang der Längsachse der Bauteile. Das Zentrum bzw. die Längsachse 121 des Blockierelements 120 liegt versetzt vom Zentrum bzw. der Längsachse 101 der Blockiervorrichtung 100. Der Sicherungsring 140 ist nicht geschlossen ausgebildet und kann so über den Schubbolzen 120 geklippt werden.

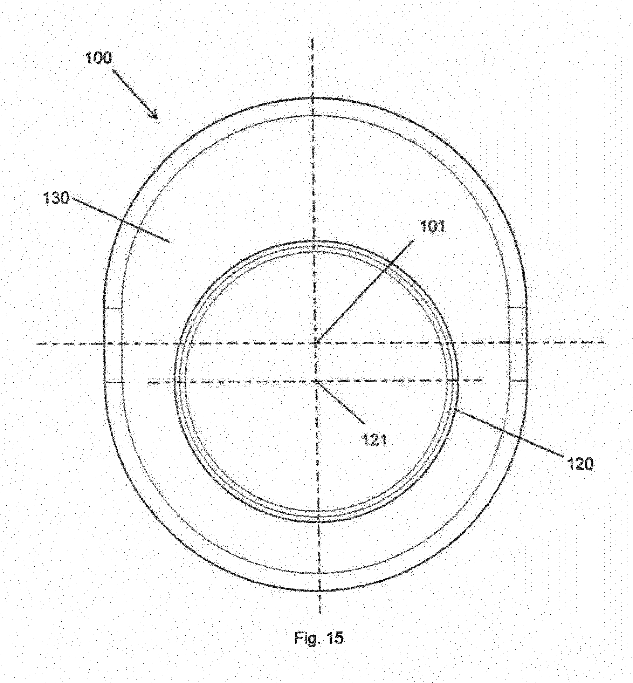

Die Figur 15 zeigt die entsprechende Außenansicht der Blockiervorrichtung 100 mit dem exzentrisch im Bolzengehäuse 130 gelagerten Schubbolzen 120. Die Längsachsen 121 und 101 sind voneinander beabstandet.

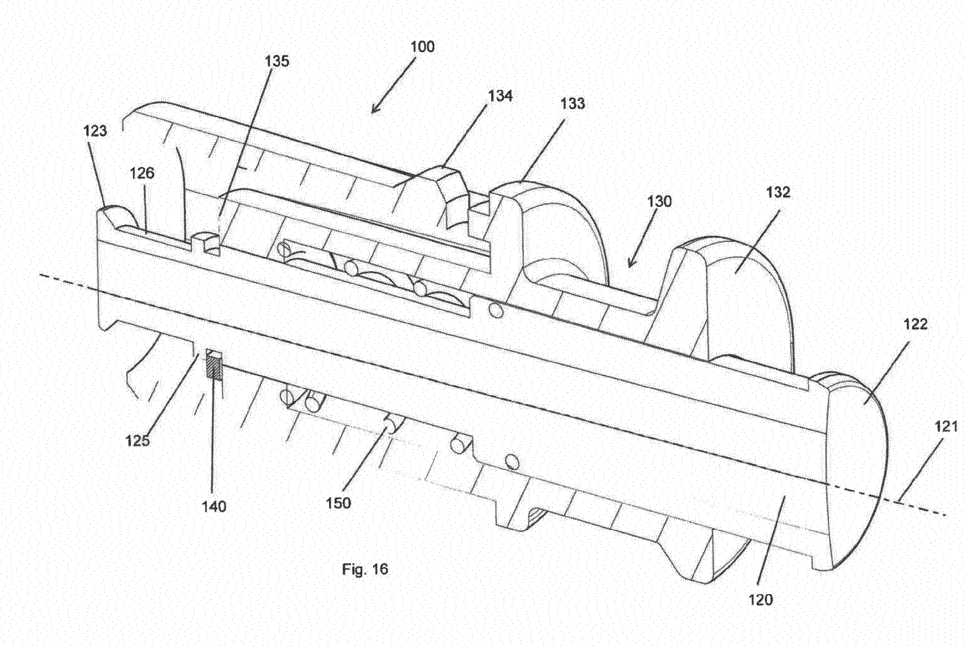

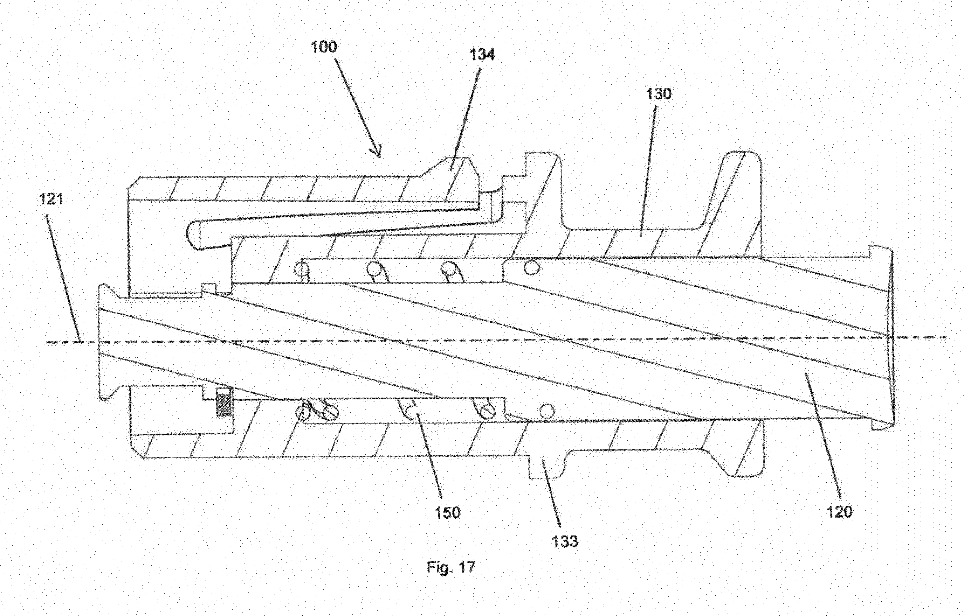

Figuren 16 und 17 zeigen eine perspektivische und eine seitliche Schnittansicht der Blockiervorrichtung 100 in der Passivstellung. Die Feder 150 spannt den Schubbolzen 120 gegenüber dem Bolzengehäuse 130 vor. Der Sicherungsring 140 begrenzt die Vorspannung und ist zwischen dem Vorsprung 125 und dem Anschlag 135 festgelegt. Der Schubbolzen 120 weist an seinem Ende 122 eine Druckfläche auf. Das durchmesservergrößerte Blockadeende 123 steht in der Blockadestellung mit dem Käfigblech in Eingriff. Damit sich der Schubbolzen 120 nicht in die Ausgangsposition zurückziehen kann, ist der Durchmesser des Blockadeendes 123 gegenüber der Kontaktfläche 126 vergrößert. Dazwischen liegt eine Schräge. Das Käfigblech steht mit der Kontaktfläche 126 und der Schräge des Blockadeendes 123 in reibschlüssiger Verbindung. Das Bolzengehäuse 130 weist die Rastnase 134 und mehrere durchmesservergrößerte Abschnitte 132 und 133 auf.

Ein weiterer Aspekt der Erfindung ist der vereinfachte Montage- und Einstellprozess des koaxial zu montierenden hinteren Schaltwerks 10.

In den Figuren 18 und 19 erklären zwei Flussdiagramme die einzelnen Schritte der Prozesse. Die Schritte sind zum Teil gleichermaßen für mechanische und elektromechanische Schaltwerke anzuwenden.

Während der Montage und der Einstellung kommt auch die Blockiervorrichtung 100 zum Einsatz, mittels der die im UZS vorgespannte Kettenführungsanordnung 90 gegenüber dem beweglichen Element 40 in einer vorbestimmten Drehposition festgelegt wird. Die vorbestimmte Dreh- oder Winkelposition legt das obere Kettenführungsröllchen 91 in einem idealen Abstand (chain gap oder B-Gap) zu einem Referenzritzel z. B. auf dem 7. Ritzel des Ritzelpakets fest. Zum Einstellen des Schaltwerks 10 wird dieses mittels der Blockiervorrichtung 100 arretiert. Nach dem Einstellen wird die Arretierung gelöst, so dass sich die Kettenführungsanordnung 90 relativ zum beweglichen Element 40 drehen kann.

Im Folgenden werden die für mechanische und elektrische Schaltwerke allgemein gültigen Montage-/Einstellschritte des Schaltwerks 10 beschrieben. Die Figuren 1 bis 5 können herangezogen werden.
i) Das Schaltwerk 10 wird mittels des Basiselements 20 und dem Adapter 60 am Rahmen 1 vormontiert. Dazu umgreift das Basiselement 20 das rechte Ausfallende 2 des Rahmens 1 und der Adapter 60 wird in die Rahmenöffnung und die Zentrieröffnungen des Basiselements 20 eingesetzt und verschraubt. Der Adapter 60 wird so weit verschraubt, dass er zusammen mit dem Basiselement 20 noch drehbar am Rahmen 1 gehalten wird.
   Nach dem ersten Montageschritt sind der Adapter 60 und das Basiselement 20 in axialer und radialer Richtung gegenüber dem Rahmen 1 vorpositioniert, aber noch nicht festgezogen. Adapter 60 und Basiselement 20 sind gegenüber dem Rahmen 1 um die Achse A drehbar.
ii) Das Hinterrad mit der gesamten Nabenanordnung wird eingesetzt und eine Steckachse eingeschraubt aber noch nicht ganz festgezogen. Im noch nicht festgezogenen Zustand lässt sich das Schaltwerk 10 noch um die Hinterradachse A drehen.
iii) Der Adapter 60 wird angezogen. Dabei wird der Bolzen so lange mit der Mutter im UZS gegenüber dem Basiselement 20 gedreht, bis die Anschläge der Mutter auf die Gegenanschläge des Basiselements 20 treffen. Aufgrund der Anschläge wird das Basiselement 20 und das gesamte Schaltwerk 10 beim Weiterdrehen so lange mitgenommen, bis die Kette 5 gespannt ist. In der gespannten Position ist sowohl das Basiselement 20, als auch die Mutter festgelegt, so dass sich der Bolzen so lange in das Innengewinde der Mutter schraubt, bis sich der Adapter 60 am Rahmen 1 festgezogen hat.
   Optional kann die Blockiervorrichtung 100 zum Einsatz kommen. Die Arretierung 100 legt die um die Achse P 41 drehbare Kettenführungsanordnung 90 in einer bestimmten Winkelposition fest und gibt damit den gewünschten Abstand zwischen dem oberen Kettenröllchen 91 und einem Referenzritzel vor. Dazu wird das Schaltwerk 10 in einen Referenzgang bzw. auf ein Referenzritzel geschalten, die Kettenführung 90 arretiert und das Basiselement 20 zusammen mit dem gesamten Schaltwerk 10 so weit um die Hinterradachse A nach hinten verdreht, bis die ideale Kettenspannung erreicht ist.
iv) In der eingestellten Position wird die Steckachse festgezogen und die Arretierung 100 gelöst. Durch das Festziehen der Steckachse wird der innere Arm 21b des Basiselements 20 zwischen der Nabenendkappe und dem Adapter 60 verklemmt. Dadurch richtet sich der Arm 22b zusammen mit dem gesamten Basiselement 20 und dem Schaltwerk 10 orthogonal zur Nabenendkappe bzw. zur Hinterradachse A aus. Eventuelle Rahmentoleranzen spielen für diese Ausrichtung keine Rolle mehr.

Diese einfache Einstellung ist nur aufgrund der koaxialen Montage des Schaltwerks 10 mit der Drehachse A und des daraus resultierenden, gleichbleibenden Abstands zwischen einem Referenzritzel und der arretierten, oberen Kettenrolle 91 möglich. Bei einem nicht koaxial montierten Schaltwerk RD würde sich der Abstand zwischen der oberen Kettenrolle und einem Referenzritzel bei einer Drehung um die von der Hinterradachse A beabstandete B-Achse des Basiselements verändern.

Die oben aufgeführten Schritte i) bis iv) finden sich größtenteils im Ablauf in Figur 19 wieder.

Figur 18 zeigt in einem Flussdiagramm den Ablauf zur Bestimmung der Fahrradkategorie und der Kettenlänge. Je nach Fahrradkategorie (Group/Gruppe 1, 2 oder 3) wird die Blockiervorrichtung 100 in der ersten oder zweiten Position in das bewegliche Element 40 eingesteckt.

Figur 18 zeigt eine Gesamtansicht des Flussdiagramms. Für eine bessere Sichtbarkeit wird das Flussdiagramm aus der Figur 18 in fünf Abschnitte eingeteilt und in den Figuren 18A bis 18E noch einmal vergrößert auf fünf separaten Seiten dargestellt. In Figur 18 sind die fünf Abschnitte des Flussdiagramms mit gestrichelter Linie eingezeichnet. Die Figuren 18 A bis E entsprechen inhaltlich dem in Figur 18 dargestellten Flussdiagramm.

Dabei betrifft der linke Strang (all data available/alle Rahmendaten vorhanden) des Diagramms den Fall, dass alle benötigten Daten vorliegen bzw. mittels der App abrufbar sind. Hier könnte zur Unterstützung des Nutzers/Bedieners ein QR Code gescannt werden oder eine Fahrrad ID eingegeben werden, über welche die benötigten Daten abrufbar sind. Abhängig vom Fahrradmodell und dem Modelljahr kann die benötigte Kettenlänge bestimmt werden. Außerdem wird das Fahrrad einer Kategorie 1, 2 oder 3 zugewiesen.

Der rechte Strang (on bike measurement/Rahmendaten am Rad ermittelt) ist für den Fall vorgesehen, dass nicht alle benötigten Daten vorliegen und diese zunächst manuell am Fahrrad gemessen werden müssen.

Die folgenden Informationen werden also automatisiert oder manuell eingegeben:
- Fully oder Hardtail
- Bei Hardtails ist nur noch die Kettenstrebenlänge im ausgefederten Zustand CSL0 (keine hintere Federung) und die Größe des Kettenrings/Kettenblatt CR notwendig, um die Kettenlänge zu bestimmen und das Fahrrad in Kategorie 1 oder 2 einzuteilen. Entsprechend der ausgegebenen Fahrradkategorie wird die Blockiervorrichtung 100 am Schaltwerk 10 orientiert.

- Es schließt sich der Einstellprozess (set up process) in Figur 19 an.
- Bei Fullies sind die Kettenstrebenlängen in den drei verschiedenen Federzuständen CSL0, CSLmax und CSLsag notwendig.
- Auswahl des hinteren Federtyps, Auswahl der Kettenblattgröße

Am Ende dieses Einstellprozesses weiß der Nutzer, welche Kettenlänge notwendig ist und in welcher Position das Blockierelement 100 eingesetzt wird.

Für den Fall, dass drei oder weitere Kategorien/Gruppen im ausgefederten Zustand eingestellt werden sollen, kann das Blockierelement in eine dritte oder weitere Einstellposition gebracht werden. Siehe hierzu jene Ausführungen des Blockierelements, die drei oder mehr Einstellpositionen aufweisen. Sollte das Blockierelement über nur eine oder zwei Einstellpositionen verfügen, wäre es auch denkbar das Referenzritzel zu verändern und beispielsweise in den sechsten Gang zu schalten.

Daran schließt sich der Montage- und Einstellprozess des Schaltwerks an, wie er in Figur 19 dargestellt ist.

Figur 19 zeigt wiederum die Gesamtansicht des Flussdiagramms, welches für eine bessere Sichtbarkeit in zwei Abschnitte eingeteilt und in den Figuren 19A bis 19B noch einmal vergrößert auf zwei Seiten dargestellt ist. In Figur 19 sind die zwei Abschnitte des Flussdiagramms mit gestrichelter Linie eingezeichnet. Die Figuren 19 A und B entsprechen inhaltlich dem in Figur 19 dargestellten Flussdiagramm.

Der erste Schritt zur Bestimmung der Kettenlänge ist in diesem Fall bereits erledigt (siehe Figur 18). Als nächstes wird der Antrieb am Fahrrad montiert und die Kette in den 12. Gang gelegt. Dann werden die Steckachse und der Bolzen gelöst und die Blockiervorrichtung 100 in die Aktivstellung gebracht (entspricht den Schritten i) bis iii) wie oben detailliert erklärt). In Figur 19 wird das Blockierelement 100 als "adjustlock" bezeichnet.

Anschließend wird die Einstellabfolge ausgelöst. Diese kann entweder direkt am elektrischen Schaltwerk 10 (rechter Strang) oder mit Hilfe einer App durchgeführt werden (linker Strang).

Beide Einstellabfolgen erfolgen mit dem Schaltwerk im 7. Gang (Referenzritzel). Das Referenzritzel wird entweder über die App angefahren oder durch Drücken des Einstellknopfes direkt am Schaltwerk 10. Für eine vereinfachte Handhabung ist es denkbar, das Referenzritzel optisch hervorzuheben. Beispielsweise könnte das 7. Ritzel oder die darunter liegende Locktube farblich gekennzeichnet werden.

Wenn sich die Kette auf dem Referenzritzel befindet, wird die Kettenführung bzw. der Käfig im UZS (in der Außenansicht) zurückgezogen, bis die Kette gespannt ist und der Bolzen und die Steckachse festgezogen (vgl. Schritt iii) und iv) oben).

Anschließend wird der richtige Abstand (B-Gap) bestätigt und die Einstellung ist abgeschlossen. Das Schaltwerk 10 kann außerdem eine LED aufweisen, welche optische Signale ausgibt, um die korrekte Einstellung und/oder die erfolgreiche Ausführung eines Arbeitsschrittes anzuzeigen.

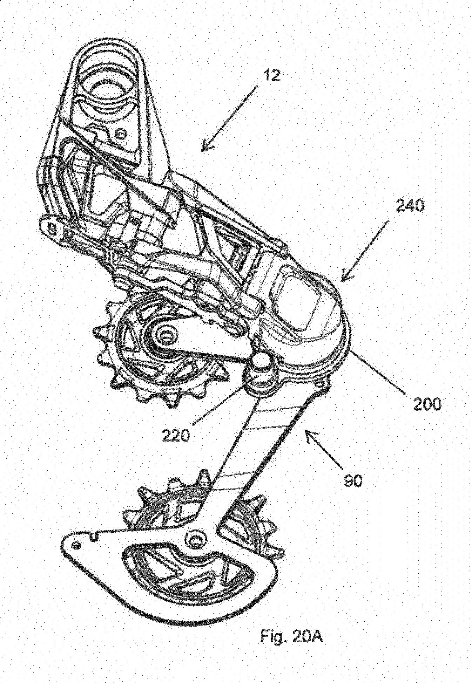

Figur 20 A zeigt eine perspektivische Außenansicht des Schaltwerks 12 mit einer zweiten Ausführungsform der Blockiervorrichtung 200 in Form eines Einstellrings. Das Schaltwerk 12 unterscheidet sich von der vorhergehenden Ausführungsform in erster Linie hinsichtlich der Blockiervorrichtung 200. Entsprechend wird vorrangig auf die Blockiervorrichtung 200 eingegangen. Die Bezugszeichen baugleicher Teile werden übernommen. Der Einstellring 200 ist ringförmig ausgebildet und koaxial mit der P-Achse 41 am beweglichen Element 240 angeordnet. Insbesondere ist der Einstellring 200 um die P-Achse 41 drehbar am beweglichen Element 240 gelagert. An dem Einstellring 200 ist ein Blockierelement 220 angeordnet, welches sich entlang seiner Längsachse 212 in die Aktiv- und Passivstellung bringen lässt. Durch Drehung um die P-Achse 41 lässt sich die Blockvorrichtung 200 stufenlos positionieren. Je nach Winkelposition der Blockiervorrichtung 200 verändert sich die Einstellposition zwischen dem Blockierelement 220 und dem Käfig 90. Am P-Knuckle 240 könnten Markierungen oder eine Rasterung vorgesehen sein, welche verschiedene Positionen je nach Fahrradkategorie anzeigen und die Einstellung erleichtern.

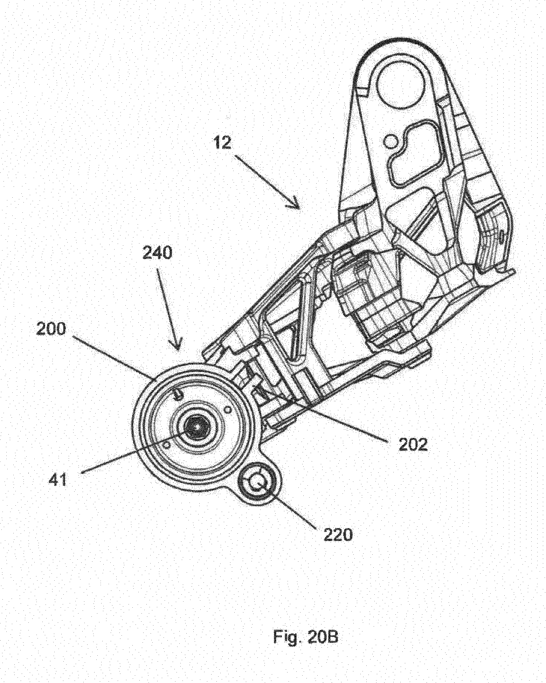

Figur 20 B zeigt eine Innenansicht eines Teils des Schaltwerks 12 aus Figur 20 A. Zur besseren Sichtbarkeit ist der Käfig hier nicht dargestellt. Der Einstellring 200 umschließt des bewegliche Element 240 fast vollständig. Im Einstellring 200 integriert ist eine Aufnahme für das Blockierelement 220. Im gezeigten Ausführungsbeispiel ist der Einstellring 200 schellenartig ausgebildet und an einer Stelle geöffnet. Die beiden Enden 202 des Einstellrings 200 können mit einer Schraube (nicht dargestellt) verbunden werden. Der Einstellring 200 wird zusammen mit dem Blockierelement 220 um die P-Achse 41 verdreht und je nach Fahrradkategorie in die richtige Einstellposition gebracht. In der ausgewählten Position werden die Enden 202 des schellenartigen Einstellrings 200 festgezogen und die Blockiervorrichtung 200 relativ zum beweglichen Element 240 festgelegt.

Die Arretierung der vorgespannten Blockiervorrichtung 200 erfolgt gemäß der ersten Ausführungsform. Die Blockiervorrichtung 200 wirkt mit einem Anschlag am Käfig 90 zusammen und arretiert diesen in einer vorbestimmten Position. Das gezeigte Blockierelement 220 ist konzentrisch im Gehäuse angeordnet. Eine Drehung des Blockierelementes 220 um 180 Grad erübrigt sich hier, weil aufgrund der stufenlosen Einstellbarkeit eine Vielzahl von Positionen möglich sind.

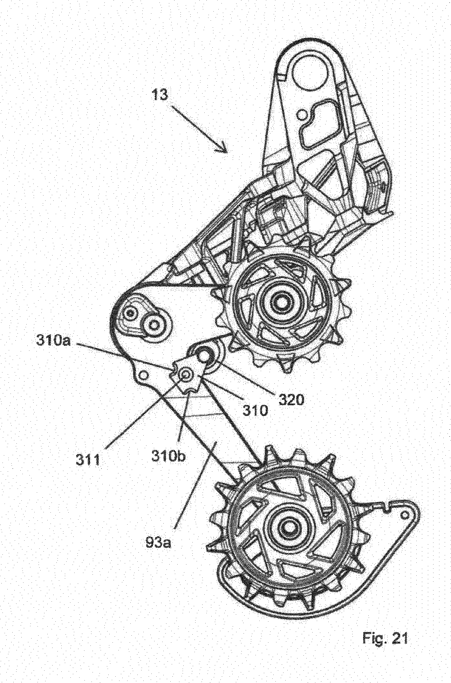

Figur 21 zeigt eine Innenansicht des Schaltwerks 13 mit einer dritten Ausführungsform der Blockiervorrichtung 300. Zur besseren Sichtbarkeit ist das innere Käfigblech des Käfigs nicht dargestellt. Die gezeigte Ausführungsform der Blockiervorrichtung 300 besteht aus einem drehbar am äußeren Käfigblech 93a gelagerten Gegenstück 310, welches mit dem Blockierelement 320 zusammenwirkt. Das Gegenstück 310 ist um die Drehachse 311 drehbar am Käfig 90 gelagert und weist drei Ausnehmungen 310 a, b, c auf. Die Ausnehmungen 310 a, b, c erlauben drei verschiedene Einstellpositionen des Käfigs relativ zum beweglichen Element 40. Das Gegenstück 310 kann entweder mit einem Werkzeug oder werkzeuglos durch Drehung um die Achse 311 in die richtige Position gebracht werden. In der gezeigten Position steht das Blockierelement 320 mit der Ausnehmung 310 c in Eingriff.

Denkbar wäre auch das Gegenstück mit zwei, vier oder mehr Ausnehmungen für eine entsprechende Anzahl von Einstellpositionen zu versehen.

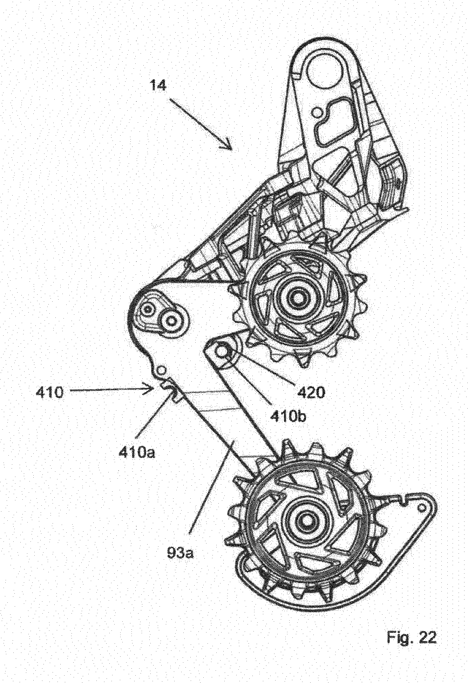

Figur 22 zeigt eine Innenansicht des Schaltwerks 14 mit einer vierten Ausführungsform der Blockiervorrichtung 400, ebenfalls ohne das innere Käfigblech. Die Blockiervorrichtung 400 besteht aus einem länglichen, am äußeren Käfigblech 93a zu befestigenden Clip 400 und dem Blockierelement 420. Der Clip 400 ist lösbar mit dem Käfigblech 93a verbunden, insbesondere umgreift der Clip 400 das Käfigblech 93a. Der Clip 400 weist zwei unterschiedlich weit über den Rand des Käfigblechs 93a hinausstehende Enden mit jeweils einer Ausnehmung 410 a und 410 b auf. Der Clip 400 kann um 180 Grad gedreht werden und in zwei verschiedenen Positionen auf das Käfigblech 93a aufgesteckt werden. Je nach Anbringung wirkt das Blockierelement 420 mit der ersten Ausnehmung 420 a oder der zweiten Ausnehmung 420 b zusammen. Dadurch kann das Schaltwerk 14 in zwei verschiedenen Positionen arretiert werden.

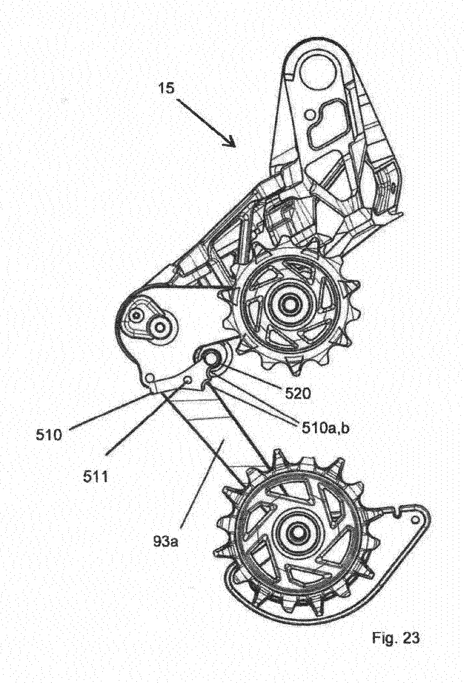

Figur 23 zeigt das Schaltwerks 15 mit einer fünften Ausführungsform der Blockiervorrichtung 500. Das innere Käfigblech ist ausgeblendet. Die gezeigte Ausführungsform der Blockiervorrichtung 500 besteht aus einem drehbar am äußeren Käfigblech 93 a gelagerten Gegenstück in Form eines Hebels 510, welcher mit dem Blockierelement 520 zusammenwirkt. Der Hebel 510 ist um die Drehachse 511 drehbar am Käfig 90 gelagert und weist drei Ausnehmungen 510 a, b, c auf. Die nebeneinander am Hebel 510 angeordneten Ausnehmungen 510 a, b, c erlauben drei verschiedene Einstellpositionen des Käfigs relativ zum beweglichen Element 40. Das Gegenstück 510 kann entweder mit einem Werkzeug oder werkzeuglos durch Drehung um die Achse 511 in die richtige Position gebracht und fixiert werden. In der gezeigten Position steht das Blockierelement 520 mit der Ausnehmung 510 c in Eingriff. Denkbar wäre auch, das Gegenstück mit zwei, vier oder mehr Ausnehmungen für eine entsprechende Anzahl von Einstellpositionen zu versehen.

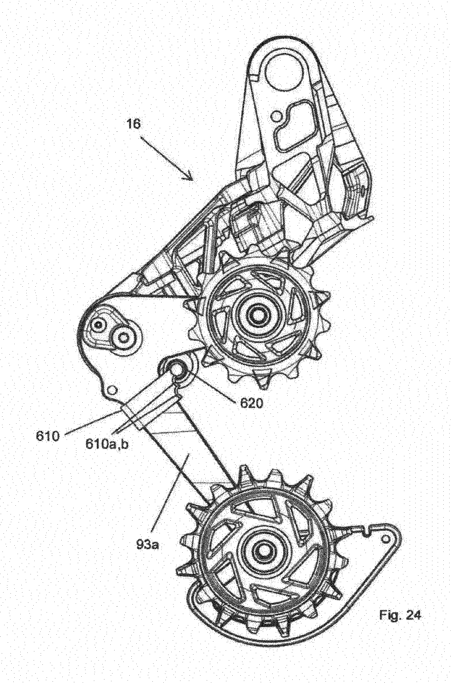

Figur 24 zeigt ein Schaltwerk 16 mit einer sechsten Ausführungsform der Blockiervorrichtung 600. Das innere Käfigblech ist nicht dargestellt. Die gezeigte Ausführungsform der Blockiervorrichtung 600 besteht aus einem entlang des Käfigblechs 93 a verschiebbar gelagerten Gegenstücks in Form eines Schiebers 610, welcher mit dem Blockierelement 620 zusammenwirkt. Der Schieber 610 ist entlang des Käfigblechs 93 a verschiebbar gelagert und/oder weist drei Ausnehmungen 610 a, b, c auf. Die nebeneinander am Schieber 610 angeordneten Ausnehmungen 610 a, b, c erlauben drei verschiedene Einstellpositionen des Käfigs relativ zum beweglichen Element 40. Der zusätzlich entlang des Käfigs verschiebbare Schieber 610 erlaubt darüber hinaus weitere Einstellpositionen. In der gezeigten Position steht das Blockierelement 620 mit der obersten Ausnehmung 610 c in Eingriff. Denkbar wäre auch, den Schieber mit einer, zwei, vier oder mehr Ausnehmungen für eine entsprechende Anzahl von Einstellpositionen zu versehen. Eine stufenlose Einstellung wäre auch mit nur einer Ausnehmung und einem entlang des Käfigs verschiebbaren Schieber 610 möglich.

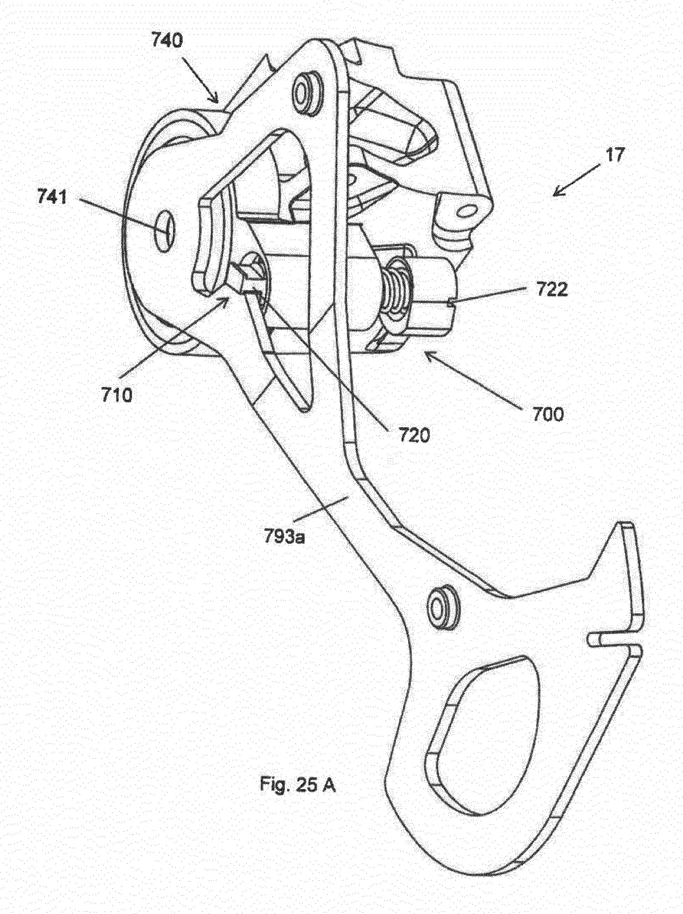

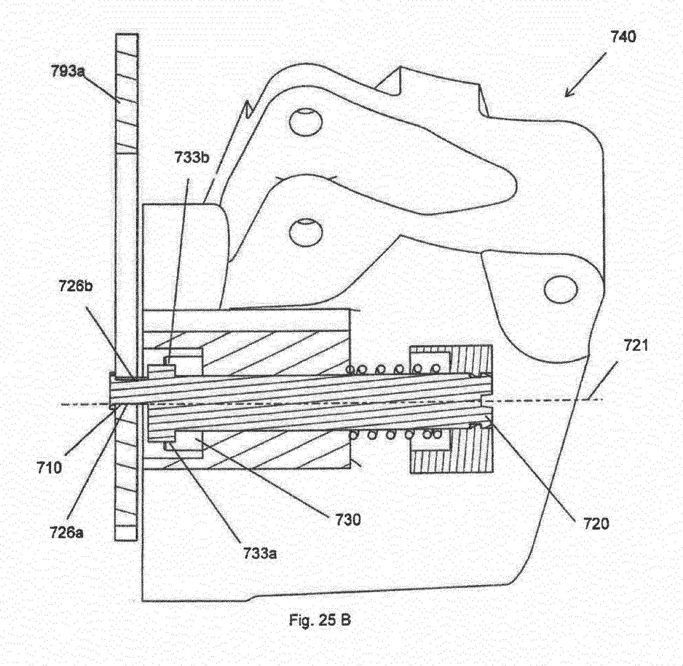

Die Figuren 25, 26 und 27 zeigen Ansichten eines Schaltwerks 17 mit einer siebten Ausführungsform der Blockiervorrichtung 700 in verschiedenen Positionen. Die Blockiervorrichtung 700 lässt sich ähnlich wie die Blockiervorrichtung 100 der ersten Ausführungsform in einer ersten Einstellposition und in einer dazu um 180 Grad gedrehten zweiten Einstellposition anordnen. Vorteilhaft bei der siebten Ausführungsform ist, dass das Blockierelement 720 nicht verloren gehen kann, da es beim Wechsel von der ersten in die zweite Position nicht vom Schaltwerk 17 gelöst wird.

Figur 25 A zeigt eine perspektivische Innenansicht von Teilen des Schaltwerks 17. Der obere Teil des Schaltwerks, sowie Teile des Käfigs sind zur besseren Übersichtlichkeit nicht dargestellt. Figur 25 B zeigt einen Schnitt durch die in Figur 25 A dargestellten Bauteile. Aus der Schnittdarstellung ergibt sich das Zusammenwirken der Anschlagsflächen 726 und der Orientierungsflächen 733.

Die Blockiervorrichtung 700 befindet sich in den Figuren 25 A in der Aktivstellung und in einer ersten Einstellposition. Die Blockiervorrichtung 700 umfasst das Blockierelement 720, welches im beweglichen Element 740 aufgenommen ist und in der Aktivstellung mit einem Gegenanschlag 710 am Käfig zusammenwirkt.

Das Blockierelement ist als Exzenterpin 720 ausgebildet. Der Exzenterpin 720 hat mindestens zwei Anschlagsflächen 726 a und 726 b, welche in der Aktivstellung mit dem Käfigblech 710 in Kontakt kommen. Die Anschlagsflächen 726 a, b am Pin 720 sind in unterschiedlichen Abständen zur Mittel- bzw. Längsachse 721 des Exzenterpins 720 angeordnet. In diesem Ausführungsbeispiel beträgt der Abstand der ersten Anschlagsfläche 726 a etwa 0 mm zur Exzenterpinachse 721 und der Abstand der zweiten Anschlagsfläche 726 b ca. 2 mm.

Die Anschlagsflächen 726 a und b am Exzenterpin 720 verlaufen parallel zu einer Gegenanschlagsfläche 710 am Schaltwerkskäfig. Die Gegenanschlagsfläche 710 befindet sich am unteren Käfigarm des äußeren Käfigblechs 793 a. Die parallele Anordnung der Flächen 726 und 710 ergibt eine flächige Anschlagssituation zwischen Schaltwerkskäfig und Exzenterpin 720, unabhängig von der Einstellposition des Exzenterpins 720.

Um die korrekte rotatorische Orientierung des Exzenterpins 720 im beweglichen Element 740 zu gewährleisten, sind zusammenwirkende Orientierungsflächen 733 a, b am Exzenterpin 720 und in dem den Exzenterpin 720 aufnehmenden Bolzengehäuse 730 vorgesehen. Solange die Orientierungsflächen 733 a, b so wie in Figur 25 in Eingriff stehen, ist der Exzenterpin 720 rotatorisch relativ zum beweglichen Element 740 festgelegt. Der nach axial außen vorgespannte Pin 720 weist am axial inneren Ende einen Vorsprung auf, welcher das äußere Käfigblech 793 a hintergreift und so in der Aktivstellung arretiert.

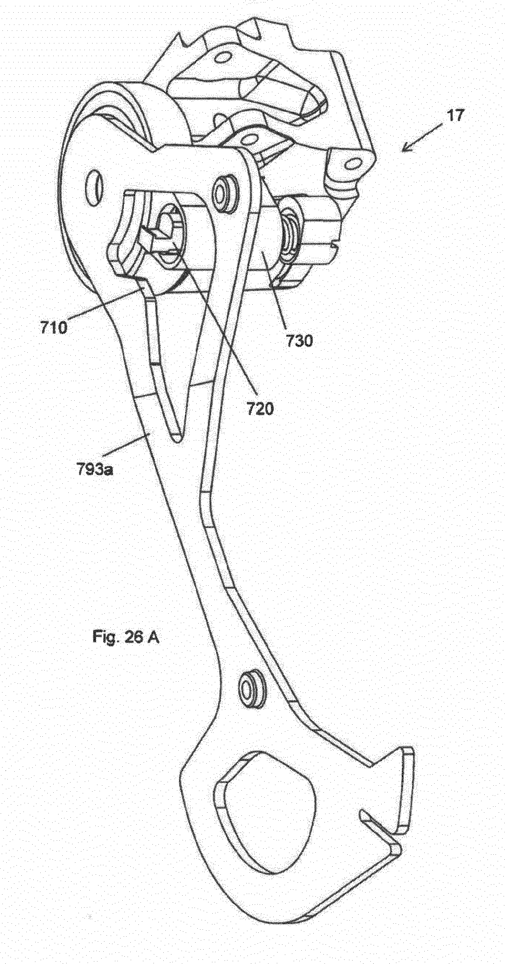

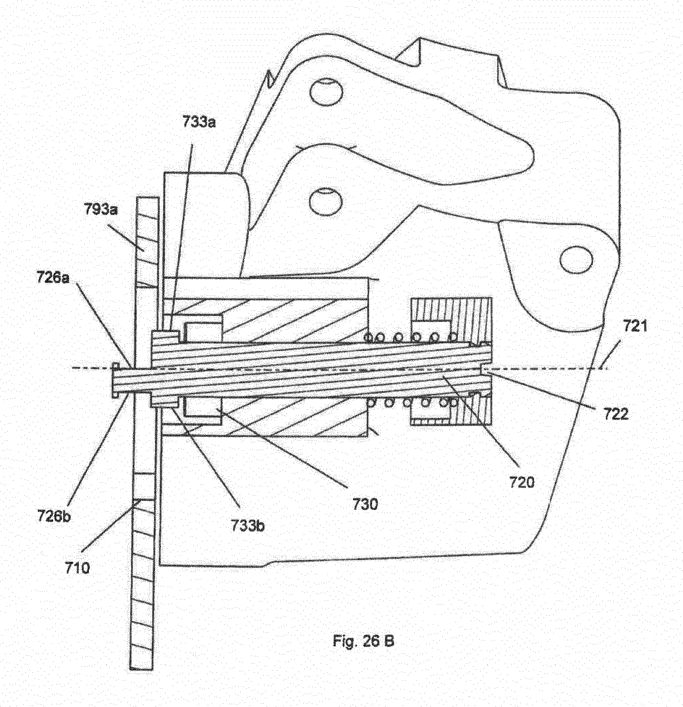

Die Figuren 26 A und B zeigen die entsprechenden Ansichten des Schaltwerks 17 aus Figur 25 in einer Wechselstellung zwischen der ersten und zweiten Position. In der gezeigten Stellung ist das Blockierelement 720 bereits um 180 Grad in die zweite Position gedreht aber noch nicht wieder mittels der Orientierungsflächen 733 relativ zum Bolzengehäuse 730 festgelegt.

Um die Einstellposition zu wechseln, wird der Schaltwerkskäfig so positioniert, dass sich der Exzenterpin 720 ungehindert in axialer Richtung bewegen lässt - also nicht mit dem Käfig zusammenwirkt. Im gezeigten Ausführungsbeispiel befindet sich der Exzenterpin 720 dazu in einem Fenster des äußeren Käfigblechs 793 a. Der Exzenterpin 720 wird so weit entlang seiner Längsachse 721 und entgegen der Vorspannung nach axial innen und damit aus dem Bolzengehäuse 730 gedrückt, bis sich die Orientierungsflächen 733 a, b am Exzenterpin 720 und im Bolzengehäuse 730 nicht mehr überdecken bzw. außer Eingriff gebracht sind. Nun kann der Exzenterpin 720 um 180 Grad gedreht werden, um in die zweite Einstellposition gebracht zu werden. In der zweiten Einstellposition ist die zweite Anschlagsfläche 726 b dem Gegenanschlag 710 zugewandt. Das Verdrehen des Pins 720 kann mit einem Werkzeug oder werkzeuglos erfolgen. Das Druckende des Pins 720 kann dafür mit einer Werkzeugschnittstelle 722 ausgestattet sein. Nimmt man den axialen Druck vom Exzenterpin 720 bewegt sich dieser aufgrund der Vorspannung zurück, so dass die Orientierungsflächen 733 a und b überlappen bzw. in Eingriff stehen.

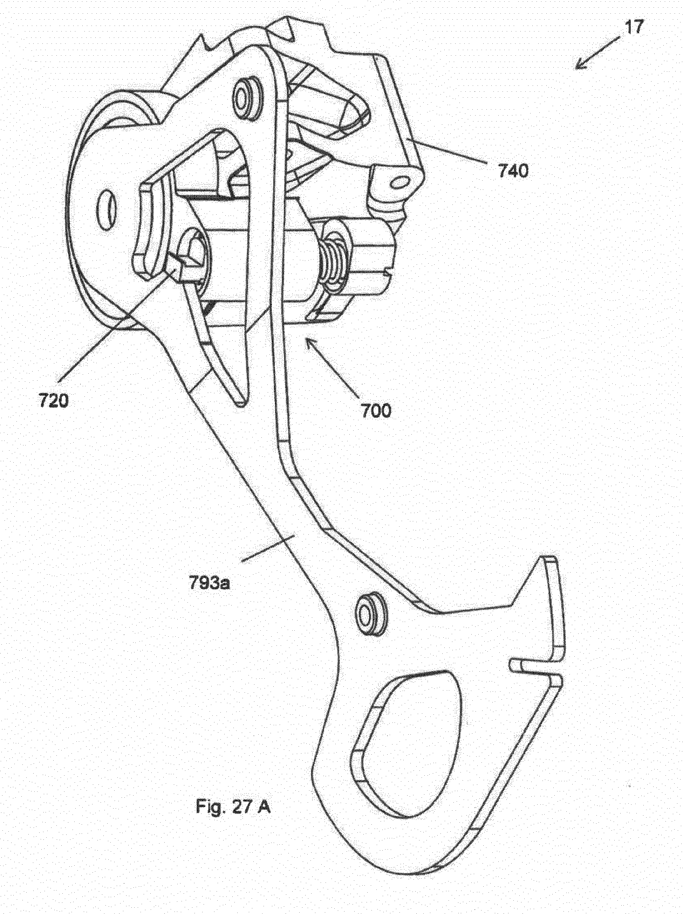

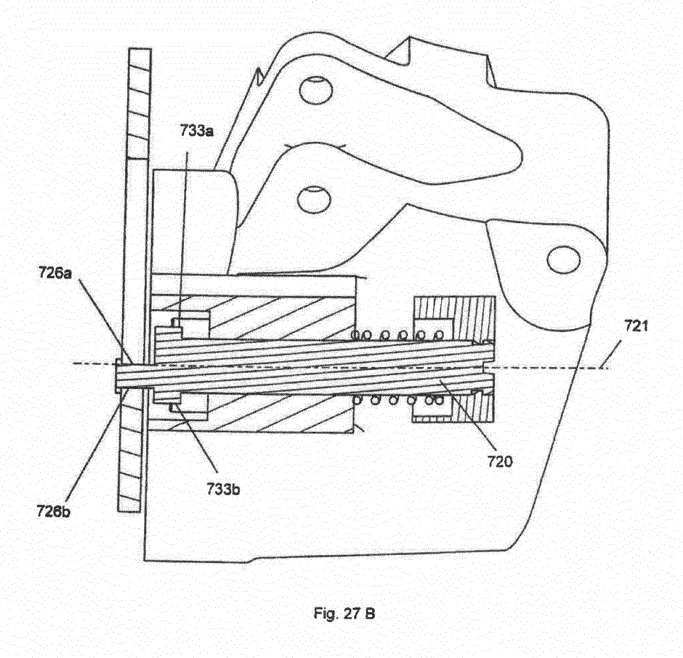

Die zweite Einstellposition des Exzenterpins 720 ist in den Figuren 27 A und B dargestellt. Der Pin 720 ist im Vergleich zur ersten Position um 180 Grad gedreht, so dass die zweite Anschlagsfläche 726 b mit dem Gegenanschlag 710 am Käfigblech 793 a zusammenwirkt. Der Vorsprung am axial inneren Ende des Exzenterpins 720 hintergreift das Käfigblech 793 a. Aus der Schnittansicht in Figur 27 B ist ersichtlich, dass die Orientierungsflächen 733 a und b überlappen und somit der Pin 720 rotatorisch im Gehäuse 730 festgelegt ist. Aufgrund der verschiedenen Abstände der Anschlagsflächen 726 a und b von der Längsachse 721 des Pins 720 wird der Käfig je nach Position in einer anderen Stellung relativ zum beweglichen Element arretiert.

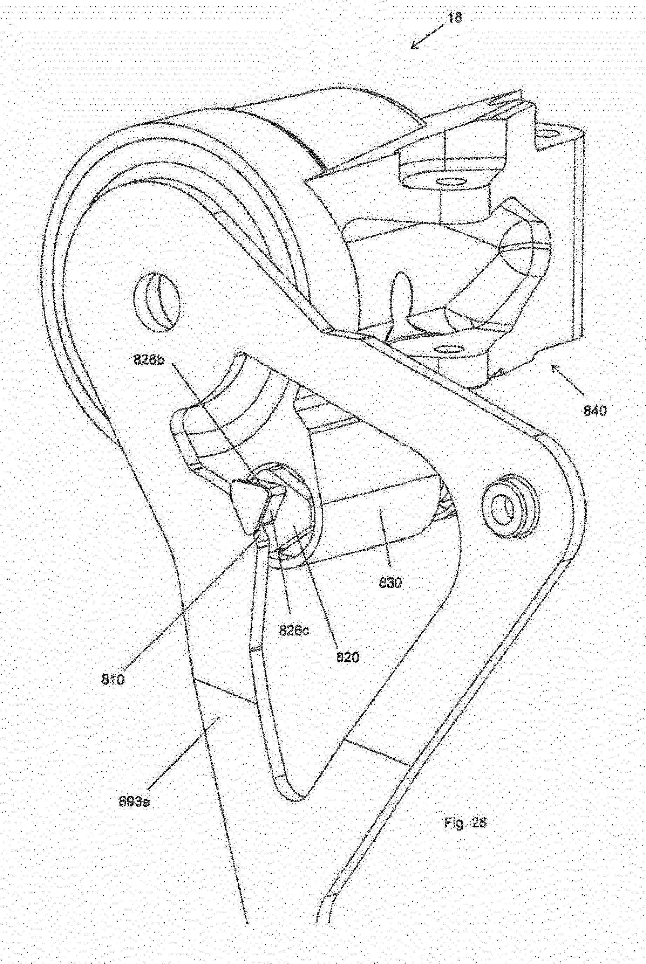

Figur 28 zeigt ein Schaltwerk 18 mit einer weiteren Ausführungsform der Blockiervorrichtung 800. Die Blockiervorrichtung 800 entspricht in weiten Teilen der vorhergehenden Ausführungsform 700. Das Blockierelement 820 weist (anstatt zwei) drei Anschlagsflächen 826 a, b und c auf. Der dreiseitige Aufbau des Exzenterpins 820 erlaubt drei Einstellpositionen (exzentrisches Dreieck). Die drei Anschlagsflächen 826 a, b und c sind in drei verschiedenen Abständen zur Längsachse des Pins 820 angeordnet. Je nachdem welche Anschlagfläche 826 a, b oder c mit dem Gegenanschlag 810 am Käfigblech 893 a zusammenwirkt, nimmt der Käfig relativ zum beweglichen Element 840 eine andere Einstellposition ein. Der Pin 820 ist an seinem axial inneren Ende mit Vorsprüngen versehen, welche das Käfigblech hintergreifen und so der axialen Vorspannung des Pins 820 entgegenwirken. In der gezeigten Ansicht befindet sich die erste Anschlagsfläche 826 a mit dem ihr zugeordneten Vorsprung in Eingriff mit dem Gegenanschlag 810. Der Aufbau des Gehäuses 830 folgt dem dreiseitigen Aufbau des Pins 820. Entsprechend sind auch jeweils drei Orientierungsflächen am Pin 820 und auf der Innenseite des Gehäuses 830 vorgesehen. Der Wechsel von einer Position in die nächste folgt dem Prinzip der vorherigen Ausführungsform.

Alternativ könnten die Orientierungsflächen der beiden vorhergehenden Ausführungsbeispiele am Exzenterpin und/oder im Gehäuse elastisch ausgelegt werden z. B. durch entsprechend dünne Wandstärken, so dass der Formschluss durch ein entsprechendes Drehmoment überwunden werden kann. In diesem Fall kann die Einstellposition auch gewechselt werden, ohne den Pin aus dem Gehäuse herauszudrücken. Um das erhöhte Drehmoment aufzubringen, wird der Exzenterpin vorzugsweise mit einer entsprechenden Werkzeugschnittstelle versehen, zum Beispiel einem Innensechskant oder Torx.

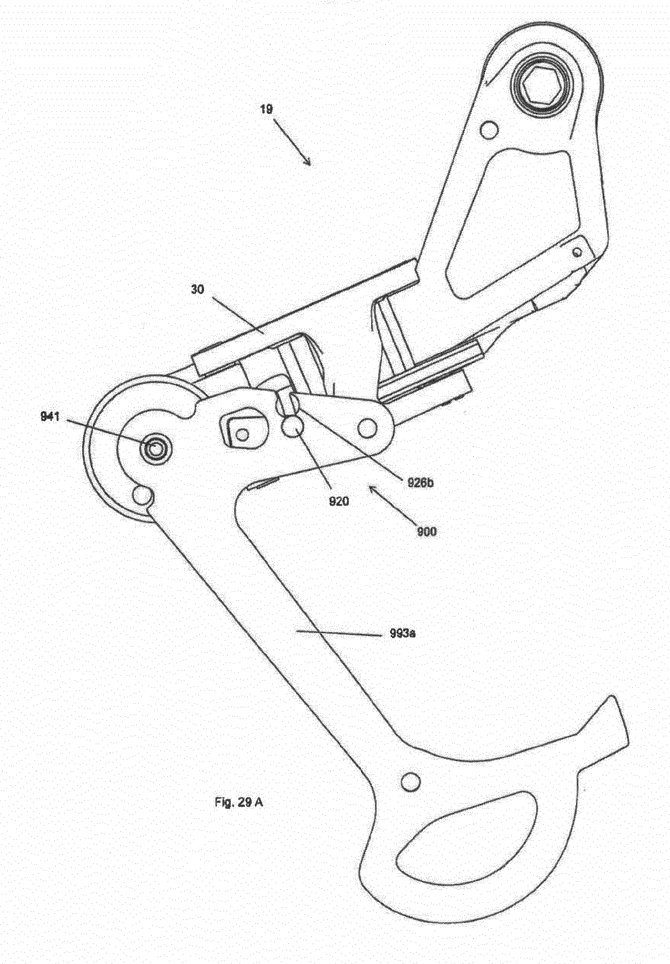

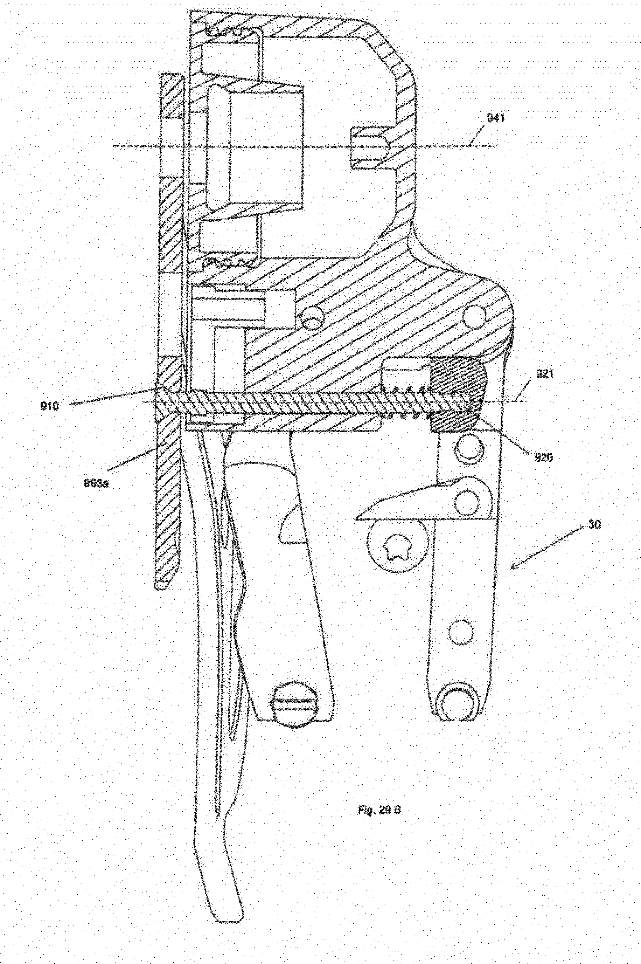

In den Figuren 29 A und B sind Teile eines Schaltwerks 19 mit einer neunten Ausführungsform der Blockiervorrichtung 900 in der Seitenansicht und im Schnitt dargestellt. Die Blockiervorrichtung besteht aus einem Blockierelement 920 und Arretierungsöffnungen 926 a und b am Käfigblech 993 a. Anders als bei den vorhergehenden Ausführungsbeispielen, sind die Arretierungsöffnungen 926 a und b am oberen Käfigarm zwischen dem oberen Führungsröllchen (nicht gezeigt) und der P-Achse 941 angeordnet. Das Blockierelement ist als angefederter Pin 920 ausgeführt. Der Pin 920 ist Entlang seiner Längsachse 921 nach axial außen vorgespannt. Vorzugsweise wird der Pin 920 möglichst weit von der P-Achse 941 positioniert, da sich sonst die Zentrierflächen 910 der Arretierungsöffnungen 926 überlappen können. Um eine kompakte Bauform des Schaltwerks 19 zu realisieren, wird der Pin 920 innerhalb des Schwenkmechanismus 30 platziert. Die Arretierungsöffnungen 926 a und b am Schaltwerkskäfig haben konische Zentrierflächen 910, die mit der konischen Fläche 910 am Zentrierkopf der Pins 920 korrelieren - vergleiche hierzu die Schnittansicht in Figur 29 B. Durch die Federspannung wird der Zentrierkopf des Pins 920 in der gewählten Arretierungsposition gehalten. Es wären auch drei oder mehr Arretierungsöffnungen denkbar, welche eine entsprechende Anzahl von Einstellpositionen erlauben.

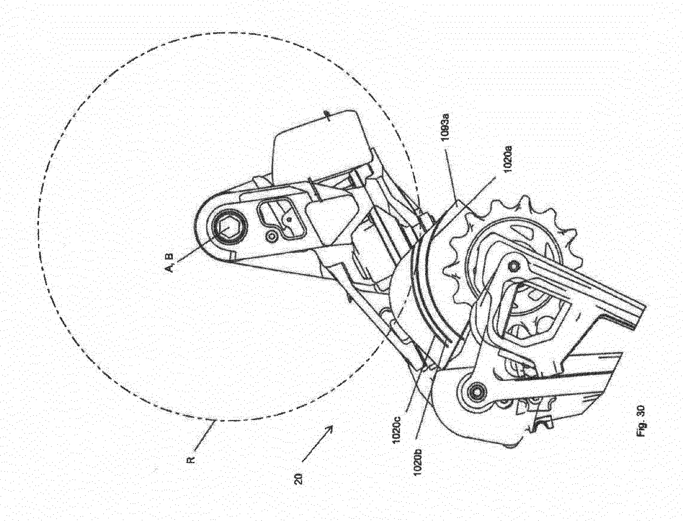

Figur 30 zeigt eine Innenansicht eines Ausschnitts des koaxialen Schaltwerks 20 mit einer alternativen Einstellvorrichtung 1000. Hier ist das äußere Käfigblech 1093 a mit drei Markierungen 1020 a, b und c versehen. Jeder Fahrradkategorie ist eine Markierung 1020 a, b oder c zugeordnet. Zum Einstellen des Schaltwerks 20 ist eine hier nicht gezeigte Fahrradkette mit dem angedeuteten Referenzritzel R in Eingriff und durchläuft das Schaltwerk s-förmig. Das gesamte Schaltwerk 20 wird entgegen der Kettenspannung so lange um die Hinterradachse A nach hinten (in der Innenansicht gegen den UZS) gedreht, bis sich die gewählte Markierung 1020 b mit dem Außenumfang des Referenzritzels R deckt. Als Referenzritzel R eignet sich eines der mittleren Ritzel, insbesondere das 6. oder 7. Ritzel. Die Anzahl der Markierungen gibt die Anzahl der Einstellpositionen vor.

Bei einem nicht-koaxialen Schaltwerk erfolgt zur Einstellung die Drehung des Schaltwerks nicht um die Hinterradachse A, sondern um die von der Hinterradachse A beabstandete B-Achse des Basiselements. Bei koaxialen Schaltwerken fallen die Hinterradachse und die B-Achse zusammen.

Alternativ zu den Markierungen auf dem Käfigblech selbst, können die drei oder mehr Markierungen auch auf einer separaten Einstellschablone aufgebracht sein.

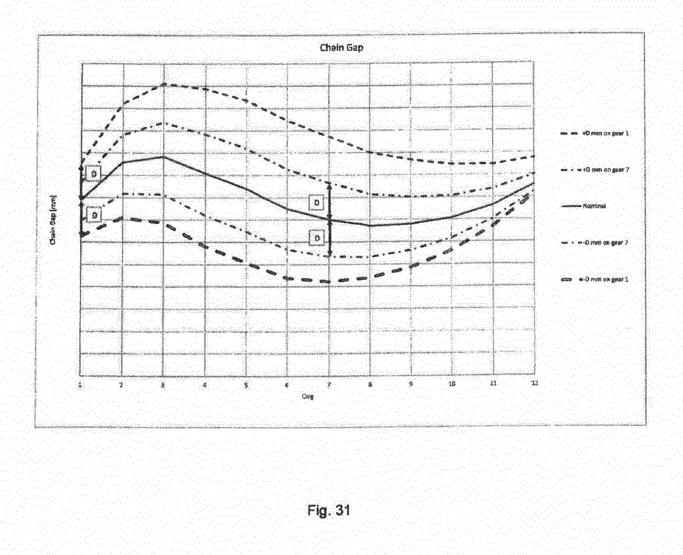

Das Diagramm in Figur 31 zeigt die Vorteile der Schaltwerkseinstellung auf einem der mittleren Ritzel z. B. auf dem siebten Ritzel bzw. im siebten Gang (*gear* 7) im Vergleich zur Einstellung auf dem größten bzw. ersten Ritzel (*gear* 1), wie es bisher üblich war. Gemessen wurde der chain gap oder B-gap jeweils im ersten und im siebten Gang mit einer Abweichung D von plus/minus 3 mm. Bei der Einstellung im ersten Gang ist die Fächerung deutlich größer als im siebten Gang. Mit Fächerung ist der Abstand zwischen dem oberen und unteren Graphen des ersten bzw. siebten Ganges gemeint. Eine geringe Fächerung ist gleichbedeutend mit einem konstanten chain gap und damit mit einer erhöhten Genauigkeit. Moderne Mehrfach-Ritzelanordnungen weisen eine wachsende Anzahl von 12 oder mehr Ritzel auf. Außerdem weisen die großen Ritzel eine hohe Anzahl von 50, 52 oder mehr Zähnen auf. Ein konstanter chain gap über alle Gänge hinweg gewinnt aufgrund der größer werdenden Mehrfach-Ritzelanordnungen an Bedeutung für die Schaltgenauigkeit.

## Patentansprüche

1. Hinteres Schaltwerk (10) für eine Fahrradschaltung umfassend:
- ein Basiselement (20), das an einem Fahrradrahmen anbringbar ist;
- ein bewegliches Element (40), das mit dem Basiselement (20) gekoppelt und relativ zu diesem verlagerbar ist,
- eine Kettenführungsanordnung (90), die mit dem beweglichen Element (40) gekoppelt und relativ zu diesem um eine Schwenkachse (41) verschwenkbar ist,
- eine Vorspanneinrichtung, mit der die Kettenführungsanordnung (90) relativ zu dem beweglichen Element (40) um die Schwenkachse (41) in eine Ausgangsstellung vorgespannt ist, wobei die Kettenführungsanordnung (90) gegen eine Spannkraft der Vorspanneinrichtung aus der Ausgangsstellung heraus um die Schwenkachse (41) in verschiedene Betriebsstellungen verschwenkbar ist, und
- wenigstens eine Blockiervorrichtung (100), die dazu vorgesehen ist, die Kettenführungsanordnung (90) in wenigstens einer von der Ausgangsstellung abweichenden Blockierstellung relativ zu dem beweglichen Element (40) zu blockieren, wobei
die Blockiervorrichtung (100) ein Blockierelement (120) aufweist, das zwischen einer Passivstellung, in der sie die Kettenführungsanordnung (90) relativ zu dem beweglichen Element (40) freigibt, und wenigstens einer Aktivstellung, in der sie die Kettenführungsanordnung (90) in der wenigstens einen Blockierstellung hält, verlagerbar ist,
**dadurch gekennzeichnet,**
**dass** die Blockiervorrichtung (100) eine Längsachse (101) und das Blockierelement (120) eine Längsachse (121) aufweist und die beiden Längsachsen (101,121) voneinander beabstandet und parallel verlaufen.

2. Hinteres Schaltwerk (10) nach einem der vorhergehenden Ansprüche,
**dadurch gekennzeichnet,**
**dass** die Kettenführungsanordnung (90) wenigstens ein Kontaktelement, insbesondere in Form eines äußeren Käfigblechs 93a oder einer Öffnung im Käfigblech 93 aufweist, das zum Blockieren der Kettenführungsanordnung (90) in der wenigstens einen Blockierstellung mit dem Blockierelement (120) zusammenwirkt bzw. in Eingriff bringbar ist.

3. Hinteres Schaltwerk (10) nach einem der vorhergehenden Ansprüche,
**dadurch gekennzeichnet,**
**dass** die Blockiervorrichtung (100) an dem beweglichen Element (40) angeordnet ist, insbesondere in einer Aufnahmeöffnung (43) des beweglichen Elements (40) gelagert ist.

4. Hinteres Schaltwerk (10) nach einem der vorangehenden Ansprüche,
**dadurch gekennzeichnet,**
**dass** das Blockierelement (120) in Richtung der Schwenkachse (41) oder parallel hierzu verlagerbar ist.

5. Hinteres Schaltwerk (10) nach einem der vorhergehenden Ansprüche,
**dadurch gekennzeichnet,**
**dass** das Blockierelement (120) entlang einer Längsachse (121) zwischen der Aktivstellung und der Passivstellung verlagerbar ist.

6. Hinteres Schaltwerk (10) nach einem der vorangehenden Ansprüche,
**dadurch gekennzeichnet,**
**dass** die Blockiervorrichtung (100) weiter ein Bolzengehäuse (130) zur Lagerung des Blockierelements (120) aufweist.

7. Hinteres Schaltwerk (10) nach einem der vorangehenden Ansprüche,
**dadurch gekennzeichnet,**
**dass** das Blockierelement (120) in die Passivstellung vorgespannt ist, vorzugsweise durch eine Federeinrichtung (150).

8. Hinteres Schaltwerk (10) nach einem der vorangehenden Ansprüche,
**dadurch gekennzeichnet,**
**dass** das Blockierelement (120) eine Längsachse (121) aufweist und das Bolzengehäuse (130) eine Gehäuselängsachse (131) aufweist und die beiden Längsachsen (121,131) voneinander beabstandet und parallel verlaufen.

9. Hinteres Schaltwerk (10) nach einem der vorangehenden Ansprüche,
**dadurch gekennzeichnet,**
**dass** das Blockierelement (120) exzentrisch im Bolzengehäuse (130) gelagert ist.

10. Hinteres Schaltwerk (10) nach einem der vorangehenden Ansprüche,
**dadurch gekennzeichnet,**
**dass** das Blockierelement (120) von einem Schubbolzen gebildet ist, der mit einer Kontaktfläche (126) ausgebildet ist, womit er in der wenigstens einen Blockierstellung formschlüssig oder kraftschlüssig zum Blockieren der Kettenführungsanordnung (90) relativ zum beweglichen Element (40) an einer dieser Komponenten angreift, insbesondere an einer Kante oder einer Öffnung des äußeren Käfigblechs (93a) der Kettenführungsanordnung (90).

11. Hinteres Schaltwerk (10) nach einem der vorangehenden Ansprüche,
**dadurch gekennzeichnet,**
**dass** das Blockierelement (120) in einer zweiten Blockierstellung an einem unteren Käfigarm (95) zwischen einem unteren Kettenführungsröllchen (92) und der Schwenkachse (41) angreift, wobei die zweite Blockierstellung zum Einstellen des hinteren Schaltwerks (10) relativ zu einer Mehrfach-Ritzelanordnung eingenommen wird.

12. Hinteres Schaltwerk (10) nach einem der vorhergehenden Ansprüche,
**dadurch gekennzeichnet,**
**dass** der Schubbolzen (120) eine Druckfläche/Druckende (122) zur manuellen Betätigung aufweist.

13. Hinteres Schaltwerk (10) nach einem der vorhergehenden Ansprüche,
**dadurch gekennzeichnet,**
**dass** die Blockiervorrichtung (100), bestehend aus Blockierelement (120) und Bolzengehäuse (130), in einer ersten Position oder in einer zweiten Position an dem beweglichen Element (40), insbesondere in einer Aufnahmeöffnung (43) des beweglichen Elements (40) lagerbar ist.

14. Verfahren zum Einstellen eines Fahrradantriebs, umfassend ein hinteres Schaltwerk (10) nach einem der vorhergehenden Ansprüche, eine Mehrfach-Kettenradanordnung (4), eine vorderes Kettenblatt und eine Kette (5),
wobei das hintere Schaltwerk (10) relativ zu der Mehrfach-Kettenradanordnung (4) eingestellt wird, mit den folgenden Schritten:
a) bestimmen einer Fahrradkategorie,
b) abhängig von der Fahrradkategorie, schalten in ein Referenzritzel (R), insbesondere in eines der mittleren Ritzel der Mehrfach-Kettenradanordnung (4), so dass die Kette (5) mit dem Referenzritzel (R) in Eingriff steht,
c) abhängig von der Fahrradkategorie, auswählen einer Einstellposition und einstellen der Blockiervorrichtung (100) in einer ersten, zweiten oder dritten Position,
d) verlagern der Blockiervorrichtung (100) in die Aktivstellung, so dass die Kettenführungsanordnung (90) relativ zum beweglichen Element (40) festgelegt ist,
e) nach hinten drehen des Schaltwerks (10) um die Hinterradachse (A) bis die ideale Kettenspannung erreicht ist.

## Claims

1. Rear gearshift mechanism (10) for a shift arrangement for a bicycle, comprising:
- a base element (20) which is attachable to a bicycle frame;
- a movable element (40) which is coupled to the base element (20) and is displaceable relative to the latter,
- a chain-guide arrangement (90) which is coupled to the movable element (40) and is pivotable about a pivot axle (41) relative to the latter,
- a preload device by way of which the chain-guide arrangement (90) is preloaded into a starting position about the pivot axle (41) relative to the movable element (40), wherein the chain-guide arrangement (90), from the initial position, is pivotable about the pivot axle (41) into various operating positions counter to a load force of the preload device, and
- at least one blocking apparatus (100) which is intended for blocking the chain-guide arrangement (90) in at least one blocking position, different from the starting position, relative to the movable element (40), wherein
the blocking apparatus (100) has a blocking element (120) which is displaceable between a passive position, in which said blocking apparatus releases the chain-guide arrangement (90) relative to the movable element (40), and at least one active position, in which said blocking apparatus holds the chain-guide arrangement (90) in the at least one blocking position,
**characterized**
**in that** the blocking apparatus (100) has a longitudinal axis (101) and the blocking element (120) has a longitudinal axis (121), and the two longitudinal axes (101, 121) are spaced apart from one another and parallel.

2. Rear gearshift mechanism (10) according to one of the preceding claims,
**characterized**
**in that** the chain-guide arrangement (90) has at least one contact element, in particular in the form of an outer cage plate (93a) or an opening in the cage plate (93), which is able to be brought into engagement with the blocking element (120) or interacts with the latter for the purpose of blocking the chain-guide arrangement (90) in the at least one blocking position.

3. Rear gearshift mechanism (10) according to either of the preceding claims,
**characterized**
**in that** the blocking apparatus (100) is arranged on the movable element (40), in particular is mounted in a receptacle opening (43) of the movable element (40) .

4. Rear gearshift mechanism (10) according to one of the preceding claims,
**characterized**
**in that** the blocking element (120) is displaceable in the direction of the pivot axle (41) or parallel to the latter.

5. Rear gearshift mechanism (10) according to one of the preceding claims,
**characterized**
**in that** the blocking element (120) is displaceable between the active position and the passive position along a longitudinal axis (121).

6. Rear gearshift mechanism (10) according to one of the preceding claims,
**characterized**
**in that** the blocking apparatus (100) furthermore has a pin housing (130) for mounting of the blocking element (120).

7. Rear gearshift mechanism (10) according to one of the preceding claims,
**characterized**
**in that** the blocking element (120) is preloaded into the passive position, preferably by a spring device (150) .

8. Rear gearshift mechanism (10) according to one of the preceding claims,
**characterized**
**in that** the blocking element (120) has a longitudinal axis (121) and the pin housing (130) has a housing longitudinal axis (131), and the two longitudinal axes (121, 131) are spaced apart from one another and parallel.

9. Rear gearshift mechanism (10) according to one of the preceding claims,
**characterized**
**in that** the blocking element (120) is mounted eccentrically in the pin housing (130).

10. Rear gearshift mechanism (10) according to one of the preceding claims,
**characterized**
**in that** the blocking element (120) is formed by a push pin which is designed with a contact surface (126) by way of which, in the at least one blocking position, said push pin acts, for the purpose of blocking the chain-guide arrangement (90) relative to the movable element (40), in a form-fitting or force-fitting manner on one of said components, in particular at an edge or an opening of the outer cage plate (93a) of the chain-guide arrangement (90) .

11. Rear gearshift mechanism (10) according to one of the preceding claims,
**characterized**
**in that**, in a second blocking position, the blocking element (120) acts on a lower cage arm (95) between a lower chain-guide roll (92) and the pivot axle (41), wherein the second blocking position is assumed for the purpose of setting the rear gearshift mechanism (10) relative to a multi-sprocket arrangement.

12. Rear gearshift mechanism (10) according to one of the preceding claims,
**characterized**
**in that** the push pin (120) has a pushing surface/pushing end (122) for manual actuation.

13. Rear gearshift mechanism (10) according to one of the preceding claims,
**characterized**
**in that** the blocking apparatus (100), consisting of blocking element (120) and pin housing (130), is mountable on the movable element (40), in particular in a receptacle opening (43) of the movable element (40), in a first position or in a second position.

14. Method for setting a bicycle drive comprising a rear gearshift mechanism (10) according to one of the preceding claims,
a multi-sprocket arrangement (4), a front chain wheel and a chain (5),
wherein the rear gearshift mechanism (10) is set relative to the multi-sprocket arrangement (4), comprising the following steps:
a) determining a bicycle category,
b) according to the bicycle category, shifting into a reference sprocket (R), in particular into one of the middle sprockets of the multi-sprocket arrangement (4), so that the chain (5) engages with the reference sprocket (R),
c) according to the bicycle category, selecting a setting position and setting the blocking apparatus (100) in a first, second or third position,
d) displacing the blocking apparatus (100) into the active position, so that the chain-guide arrangement (90) is fixed relative to the movable element (40),
e) rearwardly rotating the gearshift mechanism (10) about the rear-wheel axle (A) until the ideal chain tension is attained.

## Revendications

1. Dérailleur arrière (10) pour un changement de vitesse de bicyclette, comprenant :
- un élément de base (20) qui peut être installé sur un cadre de bicyclette ;
- un élément mobile (40) qui est accouplé à l'élément de base (20) et déplaçable par rapport à celui-ci,
- un ensemble de guidage de chaîne (90) qui est accouplé à l'élément mobile (40) et est pivotant par rapport à celui-ci autour d'un axe de pivotement (41),
- un dispositif de précontrainte à l'aide duquel l'ensemble de guidage de chaîne (90) est précontraint par rapport à l'élément mobile (40) autour de l'axe de pivotement (41) dans une position initiale, l'ensemble de guidage de chaîne (90), à l'encontre d'une force de contrainte du dispositif de précontrainte, étant pivotant à partir de la position initiale autour de l'axe de pivotement (41) dans différentes positions de fonctionnement, et
- au moins un dispositif de blocage (100) qui est prévu pour bloquer l'ensemble de guidage de chaîne (90) dans au moins une position de blocage s'écartant de la position initiale par rapport à l'élément mobile (40),
le dispositif de blocage (100) présentant un élément de blocage (120) qui est déplaçable entre une position passive, dans laquelle il libère l'ensemble de guidage de chaîne (90) par rapport à l'élément mobile (40), et au moins une position active, dans laquelle il maintient l'ensemble de guidage de chaîne (90) dans l'au moins une position de blocage,
**caractérisé en ce que**
le dispositif de blocage (100) présente un axe longitudinal (101) et l'élément de blocage (120) présente un axe longitudinal (121) et les deux axes longitudinaux (101, 121) sont espacés l'un de l'autre et s'étendent parallèlement.

2. Dérailleur arrière (10) selon l'une des revendications précédentes,
**caractérisé en ce que**
l'ensemble de guidage de chaîne (90) présente au moins un élément de contact, en particulier sous la forme d'une tôle de cage extérieure (93a) ou d'une ouverture dans la tôle de cage (93), lequel élément de contact coopère ou peut être amené en prise avec l'élément de blocage (120) pour le blocage de l'ensemble de guidage de chaîne (90) dans l'au moins une position de blocage.

3. Dérailleur arrière (10) selon l'une des revendications précédentes,
**caractérisé en ce que**
le dispositif de blocage (100) est disposé sur l'élément mobile (40), en particulier est monté dans une ouverture de réception (43) de l'élément mobile (40).

4. Dérailleur arrière (10) selon l'une des revendications précédentes,
**caractérisé en ce que**
l'élément de blocage (120) est déplaçable en direction de l'axe de pivotement (41) ou parallèlement à celui-ci.

5. Dérailleur arrière (10) selon l'une des revendications précédentes,
**caractérisé en ce que**
l'élément de blocage (120) est déplaçable le long d'un axe longitudinal (121) entre la position active et la position passive.

6. Dérailleur arrière (10) selon l'une des revendications précédentes,
**caractérisé en ce que**
le dispositif de blocage (100) présente en outre un logement de boulon (130) pour le montage de l'élément de blocage (120).

7. Dérailleur arrière (10) selon l'une des revendications précédentes,
**caractérisé en ce que**
l'élément de blocage (120) est précontraint dans la position passive, de préférence par le biais d'un dispositif ressort (150).

8. Dérailleur arrière (10) selon l'une des revendications précédentes,
**caractérisé en ce que**
l'élément de blocage (120) présente un axe longitudinal (121) et le logement de boulon (130) présente un axe longitudinal de logement (131) et les deux axes longitudinaux (121, 131) s'étendent de manière espacée l'un de l'autre et parallèlement.

9. Dérailleur arrière (10) selon l'une des revendications précédentes,
**caractérisé en ce que**
l'élément de blocage (120) est monté de manière excentrique dans le logement de boulon (130).

10. Dérailleur arrière (10) selon l'une des revendications précédentes,
**caractérisé en ce que**
l'élément de blocage (120) est formé par un boulon de poussée qui est pourvu d'une surface de contact (126), par le biais de laquelle, dans l'au moins une position de blocage, pour le blocage de l'ensemble de guidage de chaîne (90) par rapport à l'élément mobile (40), il vient en prise par complémentarité de formes ou à force avec l'un de ces composants, en particulier avec un bord ou une ouverture de la tôle de cage extérieure (93a) de l'ensemble de guidage de chaîne (90).

11. Dérailleur arrière (10) selon l'une des revendications précédentes,
**caractérisé en ce que**
l'élément de blocage (120), dans une deuxième position de blocage, vient en prise avec un bras de cage inférieur (95) entre un rouleau de guidage de chaîne inférieur (92) et l'axe de pivotement (41), la deuxième position de blocage étant adoptée pour le réglage du dérailleur arrière (10) par rapport à un ensemble de pignons multiples.

12. Dérailleur arrière (10) selon l'une des revendications précédentes,
**caractérisé en ce que**
le boulon de poussée (120) présente une surface de pression/extrémité de pression (122) pour l'actionnement manuel.

13. Dérailleur arrière (10) selon l'une des revendications précédentes,
**caractérisé en ce que**
le dispositif de blocage (100), constitué de l'élément de blocage (120) et du logement de boulon (130), peut être monté dans une première position ou dans une deuxième position sur l'élément mobile (40), en particulier dans une ouverture de réception (43) de l'élément mobile (40).

14. Procédé de réglage d'un entraînement de bicyclette, comprenant
un dérailleur arrière (10) selon l'une des revendications précédentes,
un ensemble de roues à chaîne multiples (4), un plateau avant et une chaîne (5),
le dérailleur arrière (10) étant réglé par rapport à l'ensemble de roues à chaîne multiples (4), présentant les étapes suivantes :
a) détermination d'une catégorie de bicyclette,
b) en fonction de la catégorie de bicyclette, passage à un pignon de référence (R), en particulier à l'un des pignons centraux de l'ensemble de roues à chaîne multiples (4), de sorte que la chaîne (5) soit en prise avec le pignon de référence (R),
c) en fonction de la catégorie de bicyclette, sélection d'une position de réglage et réglage du dispositif de blocage (100) dans une première, deuxième ou troisième position,
d) déplacement du dispositif de blocage (100) dans la position active, de sorte que l'ensemble de guidage de chaîne (90) soit fixé par rapport à l'élément mobile (40),
e) rotation vers l'arrière du dérailleur (10) autour de l'axe de roue arrière (A) jusqu'à ce que la tension de chaîne idéale soit atteinte.
